(19) Europäisches Patentamt
European Patent Office
Office européen des brevets

(11) **EP 2 534 749 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(21) Anmeldenummer: **10709387.4**

(22) Anmeldetag: **11.02.2010**

(51) Int Cl.:
*H02M 7/483* (2007.01)  *H02M 1/00* (2006.01)
*H02M 7/5387* (2007.01)

(86) Internationale Anmeldenummer:
**PCT/EP2010/000966**

(87) Internationale Veröffentlichungsnummer:
**WO 2011/098099 (18.08.2011 Gazette 2011/33)**

(54) **REGELUNG EINES MODULAREN UMRICHTERS MIT VERTEILTEN ENERGIESPEICHERN MIT HILFE EINES BEOBACHTERS FÜR DIE STRÖME UND EINER SCHÄTZEREINHEIT FÜR DIE ZWISCHENKREISENERGIE**

CONTROL OF A MODULAR MULTILEVEL CONVERTER WITH AN OBSERVER FOR THE CURRENTS AND AN ESTIMATOR FOR THE ENERGY OF THE INTERMEDIATE CIRCUIT

CONTRÔLE D'UN CONVERTISSEUR MULTI-NIVEAUX MODULAIRE AVEC UN OBSERVATEUR POUR LES COURANTS ET UN ESTIMATEUR POUR L'ÉNERGIE DU CIRCUIT INTERMÉDIAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**19.12.2012 Patentblatt 2012/51**

(73) Patentinhaber: **Siemens Aktiengesellschaft**
**80333 München (DE)**

(72) Erfinder:
• **LIU, Steven**
**67663 Kaiserslautern (DE)**
• **MÜNCH, Philipp**
**67663 Kaiserslautern (DE)**

(56) Entgegenhaltungen:
**WO-A1-2008/067784**

• **PHILIPP MUNCH ET AL: "Modeling and current control of modular multilevel converters considering actuator and sensor delays", IECON 2009 - 35TH ANNUAL CONFERENCE OF IEEE INDUSTRIAL ELECTRONICS (IECON 2009) - 3-5 NOV. 2009 - PORTO, PORTUGAL, IEEE, PISCATAWAY, NJ, USA, 3. November 2009 (2009-11-03), Seiten 1633-1638, XP031629417, ISBN: 978-1-4244-4648-3**
• **SINGH B N ET AL: "Fuzzy control of integrated current controlled converter-inverter fed cage induction motor drive", INDUSTRIAL AUTOMATION AND CONTROL, 1995 (I A & C'95)., IEEE/IAS INTERN ATIONAL CONFERENCE ON (CAT. NO.95TH8005) HYDERABAD, INDIA 5-7 JAN. 1995, NEW YORK, NY, USA,IEEE, US, 5. Januar 1995 (1995-01-05), Seiten 153-159, XP010146902, DOI: DOI:10.1109/IACC.1995.465850 ISBN: 978-0-7803-2081-9**
• **HABETLER T G: "A SPACE VECTOR-BASED RECTIFIER REGULATOR FOR AC/DC/AC CONVERTERS", IEEE TRANSACTIONS ON POWER ELECTRONICS, IEEE SERVICE CENTER, PISCATAWAY, NJ, US, Bd. 8, Nr. 1, 1. Januar 1993 (1993-01-01), Seiten 30-36, XP000874474, ISSN: 0885-8993, DOI: DOI:10.1109/63.208497**

**Beschreibung**

Die Erfindung betrifft ein Verfahren zum Regeln eines steuerbare Leistungshalbleiter aufweisenden Umrichters gemäß dem Oberbegriff des Anspruchs 1, bei dem Zustandsistwerte $\hat{\underline{x}}(k)$, die den Zustand des Umrichters beschreiben, mit Zustandssollwerten $\underline{x}_{Soll}(k)$ unter Gewinnung von Regeldifferenzwerten verglichen werden, die Regeldifferenzwerte einer Regelungseinheit zugeführt werden, die an ihrem Ausgang Stellspannungswerte $\underline{u}(k)$ erzeugt, und eine Steuerelektronik in Abhängigkeit der Stellspannungswerte $\underline{u}(k)$ Steuersignale bereitstellt und an die Leistungshalbleiter des Umrichters überträgt, wobei die Regelungseinheit solche Stellspannungswerte $\underline{u}(k)$ generiert, dass die Regeldifferenzwerte möglichst klein werden, wobei die Zustandsistwerte $\hat{\underline{x}}(k)$ von einer Beobachtungseinheit ausgehend von den Stellspannungswerten $\underline{u}(k)$ und unter Berücksichtigung von gemessenen Stromwerten $\underline{x}(k)$ berechnet werden, wobei die Beobachtungseinheit Störungseffekte berücksichtigt, so dass die Zustandsistwerte $\hat{\underline{x}}(k)$ von Störungseffekte befreiten ungestörten Strommesswerten entsprechen.

Ferner wird in Anspruch 24 eine Anordnung zur Durchführung des Verfahrens definiert.

Das im Oberbegriff des Anspruchs 1 definierte Verfahren ist aus dem Beitrag von Philipp Münch et al. "Modeling and Current Control of Modular Multilevel Converters Considering Actuator and Sensor Delays", IECON 2009, 35th Annual Conference of IEEE Industrial Electronics (IECON 2009), 3.-5. November 2009 in Porto, Portugal, IEEE Piscataway, NJ, USA, 3. November 2009, Seiten 1633 - 1638 bekannt geworden. Bei dem dort beschriebenen Verfahren werden Zustandsistwerte, die den Zustand des Umrichters beschreiben, mit Zustandssollwerten und der Gewinnung von Regeldifferenzwerten verglichen. Die Regeldifferenzwerte werden einem Regler zugeführt, der an seinem Ausgang Stellspannungswerte bereitstellt. Die Stellspannungswerte werden an eine Steuerelektronik weitergereicht, die die zweckmäßigen Steuerungssignale für den modularen Multilevel-Umrichter erzeugt. Darüber hinaus ist eine Beobachtungseinheit offenbart, die eingangsseitig mit den Stellspannungswerten $\underline{u}(k)$ und gemessenen Stromwerten $\underline{x}(k)$ versorgt wird. Die Beobachtungseinheit erzeugt Zustandsistwerte, wobei Störungseffekte berücksichtigt werden.

Aus der WO 2008/067784 A1 ist ein Verfahren zur Regelung eines mehrstufigen Umrichters für die Hochspannungsgleichstromübertragung bekannt, wobei der Umrichter ein selbstgeführter Umrichter mit abschaltbaren Leistungshalbleitern ist. So besteht der Umrichter aus einer Brückenschaltung von Leistungshalbleiterventilzweigen, wobei jeder Leistungshalbleiterventilzweig eine Reihenschaltung von unipolaren Submodulen aufweist. Jedes Submodul verfügt wiederum über eine Leistungshalbleiterschaltung, die so mit einem Kondensator verschaltet ist, dass entweder die an dem Kondensator abfallende Spannung oder aber eine Nullspannung an den Ausgangsklemmen eines jeden Submoduls erzeugbar ist. Durch die Reihenschaltung der Submodule kann die an dem Leistungshalbleiterventil abfallende Spannung stufenweise eingestellt werden, wobei die Höhe einer Stufe der an der Kondensatoreinheit eines Submoduls abfallenden Spannung entspricht.

Der Erfindung liegt die Aufgabe zugrunde, ein Verfahren der eingangs genannten Art vorzuschlagen, das sich durch eine hohe Regelungsgenauigkeit auszeichnet.

Das betreffende Verfahren ist in Anspruch 1 definiert. Vorteilhafte Ausführungsformen sind in den abhängigen Ansprüchen definiert. Die Erfindung löst diese Aufgabe dadurch, dass die Zustandsistwerte $\hat{\underline{x}}(k)$ von einer Beobachtungseinheit ausgehend von den Stellspannungswerten $\underline{u}(k)$ und unter Berücksichtigung von gemessenen Stromwerten $\underline{x}(k)$ berechnet werden, wobei die Beobachtungseinheit Störungseffekte berücksichtigt, so dass die Zustandsistwerte $\hat{\underline{x}}(k)$ von Störungseffekte befreiten ungestörten Strommesswerten entsprechen.

Erfindungsgemäß ist eine Beobachtungseinheit bereitgestellt, die den zu regelnden Umrichter modelliert. Der Umrichter wird mit anderen Worten in ein mathematisches Modell überführt, das Störungseffekte berücksichtigt. Der Zustand des Umrichters wird hierbei zweckmäßigerweise durch die Regelgrößen, also beispielsweise die Netz-, Gleich- und Kreisströme, beschrieben, wobei die Regelgrößen in einem Zustandsvektor $\hat{\underline{x}}(k)$ zusammengefasst sind. Entsprechendes gilt für die Sollgrößen, die ebenfalls in einem Sollvektor $\underline{x}_{Soll}$ zusammengefasst werden. Ausgehend von den eingangsseitig zur Verfügung gestellten Stellspannungswerten modelliert die Beobachtungseinheit den Umrichter. Insbesondere wird das dynamische Verhalten des Umrichters mathematisch nachgebildet, wobei zweckmäßige Matrizen hergeleitet werden, die auf den Zustandsvektor beziehungsweise den Vektor der Stellparameter $\underline{u}(k)$ angewandt werden. Ausgangsseitig der Beobachtungseinheit wird dann ein Satz von Zustandsistwerten $\hat{\underline{x}}(k)$ bereitgestellt, wobei die Zustandsistwerte $\hat{\underline{x}}(k)$ Zustandsmesswerten entsprechen, die frei von Störungseffekten sind. Die Zustandsistwerte $\hat{\underline{x}}(k)$ entsprechen mit anderen Worten ungestörten Messwerten des Zustandes des Umrichters und werden der Regelung zugeführt. Erfindungsgemäß kann die Regelung daher relativ präzise ausgeführt werden.

Die Störungseffekte können u. a. auf Netzfehlern beruhen. Die Eingangsgrößen des Systems müssen nämlich gemessen werden, wobei die Messung fehlerbehaftet sein kann. Eine fehlerhafte Messung kann auch als Störgröße am Eingang des Systems aufgefasst werden.

Ferner können sich Abweichungen in den Stellspannungen ergeben, die sich ebenfalls als Störeffekte auswirken.

Störungen am Ausgang wirken als Störung unmittelbar auf die Regelgrößen.

Auch Bauteilabweichungen verursachen im stationären Fall konstante Abweichungen, die bei dem erfindungsgemäßen Verfahren ebenfalls als Störungen berücksichtigt und kompensiert werden. Die Abweichungen der Parameter verursachen einen Regelfehler, der auf eine stationäre Störung des Systems abgebildet werden kann.

Auch Oberschwingungen wurden im vorliegenden Zusammenhang als Störungen aufgefasst und mit dem erfindungsgemäßen Verfahren ausgeregelt.

Um eine besonders schnelle Regelung bei guter Stabilität zu erreichen, werden erfindungsgemäß Zustands-Zwischenkreisenergiewerte mittels einer auf ein Signalmodell der Zwischenkreisenergiewerte zurück greifenden Schätzereinheit aus gemessenen Zwischenkreisenergiewerten ermittelt, wobei die Schätzereinheit die Parameter des Signalmodells der Zwischenkreisenergiewerte unter Ermittlung jeweils einer Zustands-Zwischenkreisenergiewerte der positiv-seitigen und die negativ-seitigen Drehspannungsquelle des Umrichters darstellenden Gleichgröße errechnet, und die Zustands-Zwischenkreisenergiewerte zusätzlich zu den Zustands-Stromwerten der Regelungseinheit ausgeführt werden. Erfindungsgemäß ist also zusätzlich zu der Beobachtungseinheit eine Schätzereinheit vorhanden, mit der Zustands-Zwischenkreisenergiewerte in Form von Gleichgrößen mittels eines Signalmodells der Zwischenkreisenergiewerte ermittelt werden; die errechneten Zustands-Zwischenkreisenergiewerte werden zu einem Zustands-Zwischenkreisenergievektor zusammen gefasst und zusätzlich zu dem Zustands-Stromvektor der Regelungseinheit zugeführt. Entsprechendes gilt hinsichtlich von Soll-Zwischenkreisenergiewerte; diese werden nämlich auch zu einem Soll-Zwischenkreisenergievektor zusammen gefasst. Vorteilhafterweise sind die Zustandsistwerte Stromistwerte $\hat{\underline{x}}(k)$ und die Zustandssollwerte Stromsollwerte $\hat{\underline{x}}_{Soll}(k)$. Die Zustandsistwerte des Umrichters können im Rahmen der Erfindung jedoch neben reinen Stromistwerten auch andere elektrische Größen wie Spannungen insbesondere Stellspannungen, oder dergleichen oder andere Größen wie die Temperatur bestimmter Bauteile umfassen. Die Zustandssollgrößen entsprechen in jedem Fall den Zustandsistgrößen, da ein Vergleich, also die Differenzbildung zwischen diesen Größen, sonst nicht möglich wäre.

Zweckmäßigerweise stellt die Beobachtungseinheit neben den ungestörte Zustandsistwerten $\hat{\underline{x}}(k)$ gestörte Zustandsmodellmesswerte $\hat{\underline{y}}_d(k)$ bereit, die messbaren Zustandsmesswerten $\underline{y}_d(k)$ entsprechen, wobei die Zustandsmodellmesswerte $\hat{\underline{y}}_d(k)$ mit durch Messungen erhaltenen Zustandsmesswerten $\underline{y}_d(k)$ unter Gewinnung einer Modellmesswertabweichung verglichen werden, die Modellmesswertabweichung der Beobachtungseinheit eingangsseitig zugeführt und die Modellierung des Umrichters so durchgeführt wird, dass die Modellmesswertabweichung möglichst klein ist. Gemäß dieser zweckmäßigen Weiterentwicklung erfolgt die Modellierung des Umrichters mit einer Rückkopplung, wobei ausgenutzt wird, dass das gewählte mathematische Modell des Umrichters nicht nur die ungestörten Zustandsistwerte $\hat{\underline{x}}(k)$ liefert, sondern auch die mit Störungseffekten behafteten Zustandsmodellmesswerte. Die Zustandsmodellmesswerte entsprechen daher den durch reale Messungen erhältlichen Zustandsmesswerten. Ein Vergleich der Zustandsmesswerte mit den Zustandsmodellmesswerten, also mit anderen Worten die Bildung der Modellmesswertabweichung zwischen diesen beiden Größen, gibt daher Aufschluss über die Güte der Modellierung. Die Modellmesswertabweichung wird der Beobachtungseinheit als zweite Eingangsgröße zugeführt. Durch ihre Minimierung wird daher das Regelungsverfahren verbessert. Im Idealfall ist die Modellmesswertabweichung gleich null.

Zur diesbezüglich zweckmäßigen Weiterentwicklung wird die Modellmesswertabweichung der Beobachtungseinheit über eine Rückführungseinheit zugeführt, welche die Modellmesswertabweichung zweckmäßig verstärkt. Wird der Zustand des Umrichters über einen Zustandsvektor $\hat{\underline{x}}(k)$, beispielsweise einem aus fünf Strömen des Umrichters bestehenden Vektor, beschrieben, ergibt sich auch ein Vektor für die Modellmesswertabweichung. In diesem Fall wendet die Rückführungseinheit eine aus Konstanten bestehende Matrix auf den Vektor der Modellmesswertabweichung an. Mit anderen Worten wird die Modellmesswertabweichung durch diese Matrix in einer Weise verstärkt, die für die weitere Modellierung des Umrichters unter Minimierung der Modellmesswertabweichung zweckmäßig ist.

Zweckmäßigerweise wird der Umrichter mit Hilfe eines Zustandsraummodells gemäß

$$\hat{\underline{x}}'(k+1) = \underline{\Phi}\,\hat{\underline{x}}'(k) + \underline{\Gamma}\,\underline{u}(k)$$

$$\hat{\underline{y}}_d(k) = \underline{H}\,\hat{\underline{x}}'(k)$$

modelliert, wobei $\hat{\underline{x}}'(k)$ einem Zustandsvektor des Umrichters einschließlich gestörter Zustände, $\underline{u}(k)$ einem Vektor der Stellspannungen, $\underline{\Phi}$, $\underline{\Gamma}$ und $\underline{H}$ Modellmatrizen und $\hat{\underline{y}}_d(k)$ einem Vektor von mit Störungen behafteten Zustandsmodellmesswerten entsprechen. $k$ indiziert den jeweiligen Abtastschritt. Das gewählte Streckenmodell ist die diskrete Form einer zeitkontinuierlichen Differenzialgleichung und wird auch als Differenzengleichung bezeichnet.

Bei einem mehrstufigen Umrichter mit Leistungshalbleiterventilzweigen, die zu einer Sechs-Puls-Brücke miteinander verschaltet sind, wobei jeder Leistungshalbleiterventilzweig aus einer Reihenschaltung von unipolaren Submodulen besteht, wobei jedes Submodul eine Leistungshalbleiterschaltung sowie einen Kondensator aufweist, ist es ausreichend, den Zustand des Umrichters mit lediglich fünf Strömen zu beschreiben, da sich die anderen Ströme des Umrichters aus den fünf Zustandsgrößen berechnen lassen. Die an dem Umrichter auftretenden Ströme sind beispielsweise Netzströme, Gleichströme sowie Kreisströme zwischen den Ventilzweigen des Umrichters. Um Störungseffekte im Modell berücksichtigen zu können, wird der Zustandsvektor $\hat{\underline{x}}(k)$ um die gestörten Zustandsmesswerte $\hat{\underline{y}}_d(k)$ zu $\hat{\underline{x}}'(k)$ erweitert.

Um die Regelungsgenauigkeit noch weiter zu erhöhen, werden bei einer vorteilhaften Weiterbildung des erfindungsgemäßen Verfahrens bei der Modellierung der Beobachtungseinheit zusätzlich Verzögerungseffekte berücksichtigt, so dass die Zustandsistwerte $\hat{\underline{x}}(k)$ von Verzögerungseffekten befreiten unverzögerten und ungestörten Strommesswerten entsprechen.

Ausgangsseitig der Beobachtungseinheit wird ein Satz von Zustandsistwerten $\hat{\underline{x}}(k)$ bereitgestellt, wobei die Zustandsistwerte $\hat{\underline{x}}(k)$ Zustandsmesswerten entsprechen, die frei von Störungs- und Verzögerungseffekten sind. Die Zustandsmistwerte $\hat{\underline{x}}(k)$ entsprechen mit anderen Worten unverzögerten und ungestörten Messwerten des Zustandes des Umrichters und werden der Regelung zugeführt. Erfindungsgemäß kann die Regelung daher schneller ausgeführt werden, ohne dass Instabilitäten zu befürchten sind.

Zweckmäßigerweise stellt die Beobachtungseinheit neben den ungestörten und unverzögerten Zustandsistwerten $\hat{\underline{x}}(k)$ gestörte und verzögerte Zustandsmodellmesswerte $\hat{\underline{y}}_d(k)$ bereit, die messbaren Zustandsmesswerten $\underline{y}_d(k)$ entsprechen, wobei die Zustandsmodellmesswerte $\hat{\underline{y}}_d(k)$ mit durch Messungen erhaltenen Zustandsmesswerten $\underline{y}_d(k)$ unter Gewinnung einer Modellmesswertabweichung verglichen werden, die Modellmesswertabweichung der Beobachtungseinheit eingangsseitig zugeführt und die Modellierung des Umrichters so durchgeführt wird, dass die Modellmesswertabweichung möglichst klein ist. Gemäß dieser zweckmäßigen Weiterentwicklung erfolgt die Modellierung des Umrichters mit einer Rückkopplung, wobei ausgenutzt wird, dass das gewählte mathematische Modell des Umrichters nicht nur die ungestörten und unverzögerten Zustandsistwerte $\hat{\underline{x}}(k)$ liefert, sondern auch die mit Störungs- und Verzögerungseffekten behafteten Zustandsmodellmesswerte. Die Zustandsmodellmesswerte entsprechen daher den durch reale Messungen erhältlichen Zustandsmesswerten. Ein Vergleich der Zustandsmesswerte mit den Zustandsmodellmesswerten, also mit anderen Worten die Bildung der Modellmesswertabweichung zwischen diesen beiden Größen, gibt daher Aufschluss über die Güte der Modellierung. Die Modellmesswertabweichung wird der Beobachtungseinheit als zweite Eingangsgröße zugeführt. Durch ihre Minimierung wird daher das Regelungsverfahren verbessert. Im Idealfall ist die Modellmesswertabweichung gleich null.

Bei einer bevorzugten Variante der Weiterbildung des erfindungsgemäßen Verfahrens umfasst die Berücksichtigung von Verzögerungseffekten das Berücksichtigen von Messverzögerungen, die bei der digitalen Erfassung der elektrischen Ströme des Umrichters entstehen, und die Berücksichtigung von Stellverzögerungen, die von der Steuerelektronik verursacht werden. Bei der Erfassung der Zustandsmesswerte werden beispielsweise die Ströme des Umrichters gemessen. Das dabei gewonnene Messsignal wird in Abtastschritten k unter Gewinnung von Abtastwerten fortlaufend abgetastet. Die Abtastwerte werden anschließend digitalisiert. Die Modellierung der sich dabei einstellenden Messverzögerung erfolgt zweckmäßigerweise unter der Annahme, dass die Messverzögerung eine Zeitdauer von vier Abtastschritten entspricht. Es hat sich gezeigt, dass eine solche Annahme für einen selbstgeführten mehrstufigen Umrichter für die Hochspannungsgleichstromübertragung zweckmäßig ist.

Gemäß einer weiteren Ausgestaltung der Erfindung wird die eine Stellverzögerung $\tau$

$$\tau = (l-1)T + \tau'$$

modelliert, wobei *l* der Anzahl der Abtastschritte entspricht, deren Summe kleiner ist als die Stellverzögerung $\tau$. $\tau'$ wird als Restanteil bezeichnet und ist in jedem Falle kürzer als die Zeitdauer zwischen zwei Abtastschritten T. Bei dieser Modellierung der Stellverzögerung hat sich eine Größe von *l*=2 als zweckmäßig für einen mehrstufigen selbstgeführten Umrichter erwiesen.

Um Verzögerungseffekte im Modell berücksichtigen zu können, wird der Zustandsvektor $\hat{\underline{x}}(k)$ um die verzögerten Zustandsmesswerte $\hat{\underline{y}}_d(k)$ zu $\hat{\underline{x}}'(k)$ erweitert.

Ausgangsseitig der Beobachtungseinheit wird ein Satz von Zustands-Stromwerten $\hat{\underline{x}}(k)$ bereitgestellt, wobei die Zustands-Stromwerte $\hat{\underline{x}}(k)$ Zustands-Strommesswerten entsprechen, die frei von Störungs- und ggf. auch von Verzögerungseffekten sind. Die Zustands-Stromwerte $\hat{\underline{x}}(k)$ entsprechen mit anderen Worten unverzögerten bzw. ungestörten Strommesswerten des Umrichters und werden der Regelung zugeführt. Erfindungsgemäß sind daher hinsichtlich der Strom-Regelgrößen die Voraussetzungen für eine schnelle Regelung geschaffen, ohne dass diesbezüglich Instabilitäten zu befürchten sind.

Am Ausgang der Schätzereinheit stehen Zustands-Zwischenkreisenergien an, die aufgrund ihrer Bildung mittels Schätzung ebenfalls schnell generiert sind, so dass auch von den Zwischenkreisenergie-Regelgrößen kein langsames Regelverhalten verursacht wird.

Auf diese Weise lässt sich mit dieser Fortbildung des erfindungsgemäßen Verfahrens die Regelung des Umrichters auf der Basis einer ganzheitlichen Betrachtung mit gleichzeitiger Berücksichtigung aller regelungsrelevanten Regelgrößen unter Erzielung eines optimalen Regelverhaltens durchführen, wozu insbesondere auch eine schnell ablaufende Regelung gehört.

Bei dem erfindungsgemäßen Verfahren werden in vorteilhafter Weise die Zustands-Zwischenkreisenergiewerte der Leistungshalbleiterventilzweige der positiv-seitigen und der negativ-seitigen Drehspannungsquelle des Umrichters jeweils für sich erfasst; mittels jeweils eines Parameter-Schätzers der Schätzereinheit werden die Parameter des Signalmodells der Zwischenenergiewerte errechnet, und es werden die jeweils einen Gleichanteil beschreibenden Parameter der positiv-seitigen und der negativen Leistungshalbleiterventilzweige jeweils für sich unter Bildung der Zustands-Zwischenkreisenergiewerte addiert.

Bevorzugt werden Parameter-Schätzer mit rekursivem Algorithmus verwendet. Zu derartigen Algorithmen gehören der rekursive Least-Square-Altorithmus, der rekursive erweiterte Least-Square-Algorithmus, die rekursive Methode der Hilfsvariablen (instrumental variables), die rekursive Prediction-error-Methode und die rekursive Maximum-Likelihood-Methode bzw. Algorithmus.

Als vorteilhaft wird es ferner angesehen, wenn zur Ermittlung des Gleichanteils der Zwischenkreisenergiewerte als Schätzer Parameter-Schätzer mit einem Schwingungsmodell $w(t)$ für die Zwischenkreisenergiewerte

$$w(t) \ = \ \texttt{A}_0\texttt{+A}_{k1}\texttt{*cos(k} \omega \texttt{t)+A}_{k2}\texttt{*sin(k} \omega \texttt{t)}$$

für k=1 bis n verwendet wird,
in dem $A_0$ den Gleichanteil der Zwischenkreisenergiewerte und $A_{k1}$ und $A_{k2}$ weitere Parameter des Schwindungsmodells sowie $\omega$ die Kreisfrequenz eines mit dem Umrichter verbundenen Wechselspannungsnetzes angibt.

Der wesentliche Vorteil dieser Ausgestaltung des erfindungsgemäßen Verfahrens besteht darin, dass bei ihm der Gleichanteil der Zwischenkreisenergiewerte infolge des Einsatzes des Least-Square-Schätzers schnell ermittelt kann, was zu einem guten Regelverhalten des Umrichters insgesamt führt. Zur Regelung der Zwischenkreisenergie und zum Balancieren der Zweige des Umrichters ist nämlich der Gleichanteil erforderlich. Wird dieser Gleichanteil exakt und schnell bestimmt, dann ist dadurch auch das Regelverhalten des Umrichters insgesamt gut. Erfolgt die Regelung des Umrichters digital, was bevorzugt wird, dann lässt sich erfindungsgemäß erreichen, dass der Gleichanteil jeweils zum aktuellen Abtastzeitpunkt vorliegt oder sogar für den folgenden Abtastpunkt bereits vorausgeschätzt vorliegt.

Besonders schnell lässt sich der Gleichanteil der Zwischenkreisenergiewerte ermitteln, wenn als Schätzer ein Parameter-Schätzer mit einem Schwingungsmodell $w(t)$ für die Zwischenkreisenergiewerte

$$w(t) \ = \ \texttt{A}_0\texttt{+A}_{11}\texttt{*cos(} \omega \texttt{t)+A}_{12}\texttt{*sin(} \omega \texttt{t)+A}_{21}\texttt{*cos(2} \omega \texttt{t)+A}_{22}\texttt{*sin(2} \omega \texttt{t)}$$

verwendet wird,
in dem $A_0$ den Gleichanteil der Zwischenkreisenergiewerte und $A_{11}$ bis $A_{22}$ weitere Parameter des Schwindungsmodells sowie $\omega$ die Kreisfrequenz eines mit dem Umrichter verbundenen Wechselspannungsnetzes angibt.

Bei dem erfindungsgemäßen Verfahren kann mit Parametern unterschiedlicher Art geschätzt werden. Dabei ist es zur Erzielung einer hohen Genauigkeit vorteilhaft, wenn ein Schwingungsmodell mit zeitabhängigen Parametern $A_0(t)$ bis $A_{22}(t)$ verwendet wird.

Zur Erzielung einer relativ einfach durchführbaren Schätzung ist es ferner vorteilhaft, wenn die Zeitabhängigkeit der Parameter durch eine lineare Funktion oder eine Exponentialfunktion vorgegeben wird.

Besonders einfach, jedoch ggf. unter Inkaufnahme einer größeren Ungenauigkeit lässt sich das erfindungsgemäße Verfahren mit einem Schwingungsmodell mit zeitlich konstanten Parametern $A_0$ bis $A_{22}$ durchführen. Stimmt das Modell gut mit dem wirklichen Signal überein, arbeitet das Verfahren auch mit dem einfachen Modell genau.

Im Rahmen der Erfindung können die Zustandsgrößen neben reinen Stromwerten auch Spannungen, insbesondere Stellspannungen, oder dergleichen oder andere Größen wie die Temperatur bestimmter Bauteile umfassen. Dabei entsprechen die Sollgrößen in jedem Fall den Zustands-Größen, da ein Vergleich, also die Differenzbildung zwischen diesen Größen, sonst nicht möglich wäre.

Besonders vorteilhaft lässt sich das erfindungsgemäße Verfahren durchführen, wenn als Umrichter ein Multilevel-Umrichter verwendet wird, der zu einer Brückenschaltung miteinander verbundene Leistungshalbleiterventilzweige aufweist, wobei jeder Leistungshalbleiterventilzweige aus einer Reihenschaltung von bipolaren Submodulen besteht und jedes Submodul eine Schaltung von Leistungshalbleitern sowie eine parallel dazu angeordnete Kondensatoreinheit umfasst.

Der Erfindung liegt auch die Aufgabe zugrunde, eine Anordnung zur Regelung eines Umrichters, wie er aus der eingangs behandelten internationalen Anmeldung hervorgeht, oder allgemein einen selbst geführten Umrichters so fort zu entwickeln, dass sie eine klare Regelungsstruktur aufweist und eine schnelle Regelung bei guter Stabilität der Regelung aufweist.

Zur Lösung dieser Aufgabe ist erfindungsgemäß bei einer Anordnung zur Regelung eines Umrichters mit einer Regelungseinheit die Regelungseinheit zur Beaufschlagung mit den Stellspannungen $\underline{u}(k)$ ausgangsseitig mit einem Eingang einer ein Modell des Umrichters darstellenden Beobachtungseinheit verbunden ist, die mit einem weiteren Eingang an den Ausgang des Umrichters angeschlossen ist; die Beobachtungseinheit ist so ausgestattet, dass sie Zustandsistwerte $\hat{\underline{x}}(k)$ ausgehend von den Stellspannungswerten $\underline{u}(k)$ und unter Berücksichtigung von gemessenen Stromwerten $\underline{x}(k)$ und Berücksichtigung von Störeffekten und/oder Verzögerungseffekten derart berechnet, dass die Zustandsistwerte $\hat{\underline{x}}(k)$ von Störungseffekte befreiten ungestörten Strommesswerten entsprechen.

Zur weiteren Lösung dieser Aufgabe ist erfindungsgemäß bei einer Anordnung zur Regelung eines Umrichters mit einer Regelungseinheit die Regelungseinheit ausgangsseitig mit einem Eingang einer ein Modell des Umrichters darstellenden Beobachtungseinheit verbunden, die mit einem weiteren Eingang an den Ausgang des Umrichters angeschlossen ist; ferner ist an den Ausgang des Umrichters eine das Signalmodell von Zwischenkreisenergiewerten nachbildenden Schätzereinheit angeschlossen, und es sind die Beobachtungseinheit und die Schätzereinheit ausgangsseitig mit Ist-Eingängen der Regelungseinheit verbunden.

Vorteile dieser Anordnung sind vor allem eine gleichzeitige Berücksichtigung aller regelungsrelevanten Regelgrößen unter Erzielung eines optimalen Regelverhaltens mit schnell ablaufender Regelung.

Bei der erfindungsgemäßen Anordnung kann die Schätzereinheit in unterschiedlicher Weise ausgebildet sein. Als besonders vorteilhaft wird es angesehen, wenn bei einem Umrichter mit sechs Leistungshalbleiterventilzweigen die Schätzereinheit für jeden der drei positiv-seitigen Leistungshalbleiterventilzweige jeweils einen Schätzer und für jeden der drei negativ-seitigen Leistungshalbleiterventilzweige jeweils einen weiteren Schätzer aufweist.

Auch die Beobachtungseinheit kann in verschiedener Weise ausgeführt sein. Bevorzugt wird eine Beobachtungseinheit, die eine den Umrichter nachbildende Modelleinheit aufweist, die mit ihrem einen Eingang mit dem Ausgang der Regelungseinheit und mit ihrem anderen Eingang mit dem Ausgang einer Rückführungseinheit verbunden ist; die Rückführungseinheit ist mit dem Ausgang einer Summierschaltung verbunden, die mit ihrem einen Eingang an den Ausgang des Umrichters und mit ihrem weiteren Eingang an den Ausgang einer Ausschneideeinheit angeschlossen ist, wobei die Ausschneideeinheit mit dem Ausgang der Modelleinheit verbunden ist; außerdem ist der Ausgang der Modelleinheit über eine weitere Ausschneideeinheit mit dem Eingang der Regelungseinheit verbunden.

Bei einer besonders vorteilhaften Ausführungsform der erfindungsgemäßen Anordnung ist der Umrichter ein Multilevel-Umrichter, der zu einer Brückenschaltung miteinander verbundene Leistungshalbleiterventilzweige aufweist, wobei jeder Leistungshalbleiterventilzweige aus einer Reihenschaltung von Submodulen besteht und jedes Submodul eine Schaltung von Leistungshalbleitern sowie eine parallel dazu angeordnete Kondensatoreinheit umfasst.

Die Erfindung und deren Vorteile werden nachfolgend anhand von Ausführungsbeispielen der Erfindung unter Bezug auf die Figuren der Zeichnung beschrieben, wobei gleiche Bezugszeichen auf gleiche Bauteile verweisen und wobei

Figuren 1 und 3      eine schematische Darstellung eines beispielhaften Umrichters, der mit dem erfindungsgemäßen Verfahren geregelt wird,

Figur 4      ein erstes Ausführungsbeispiel des erfindungsgemäßen Verfahrens schematisch,

Figur 5      ein weiteres Ausführungsbeispiel des erfindungsgemäßen Verfahrens,

Figur 6      ein Ausführungsbeispiel mit einem Schätzer und

Figur 7      ein Ausführungsbeispiel der in Figur 6 dargestellten Schätzereinheit zeigt.

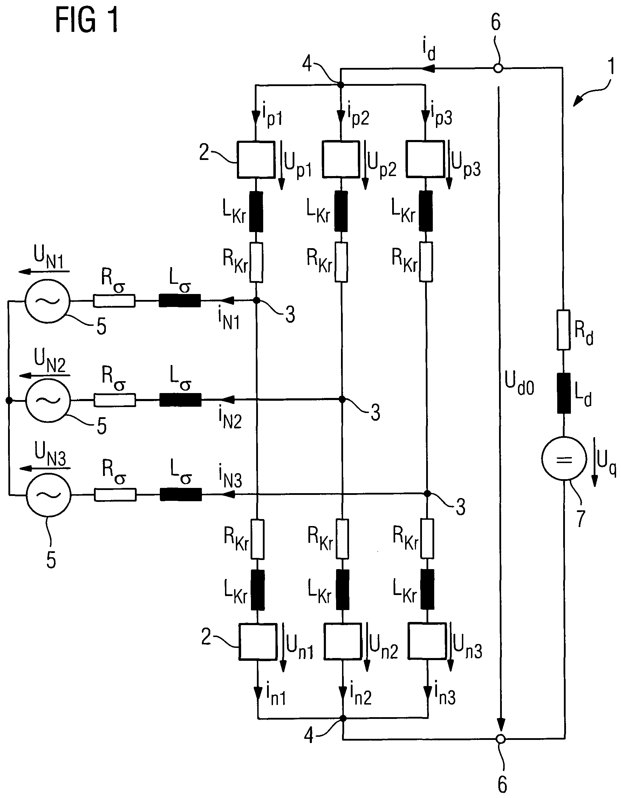

Figur 1 zeigt schematisch den Aufbau eines zu regelnden Umrichters 1, der zum Anschluss an ein in Figur 1 figürlich nicht dargestelltes Wechselstromnetz vorgesehen ist. Der Umrichter 1 verfügt über sechs Leistungshalbleiterventilzweige 2, die zu einer Sechs-Puls-Brückenschaltung miteinander verschaltet sind. Dabei erstreckt sich jeder Leistungshalbleiterventilzweig 2 zwischen einem Wechselspannungsanschluss 3 sowie einem Gleichspannungsanschluss 4. Jeder Gleichspannungsanschluss 3 ist mit einer Sekundärwicklung 5 eines figürlich nicht vollständig dargestellten Transformators verbunden, wobei die Sekundärwicklungen 5 zu einem Stern miteinander verschaltet sind. An den Sekundärwicklungen 5 fallen die Spannungen $u_{N1}$, $u_{N2}$ und $u_{N3}$ ab. Zwischen dem Wechselspannungsanschluss 3 und der Sekundärwicklung 5 sind ferner in jeder Phase ein Ohmscher Widerstand $R_\sigma$ und eine Induktivität $L_\sigma$ angeordnet, wobei die Netzströme $i_{N1}$, $i_{N2}$ und $i_{N3}$ fließen. Ferner sind Induktivitäten $L_{Kr}$ und Ohmsche Widerstände $R_{Kr}$ zwischen jedem Wechselspannungsanschluss und dem dazugehörigen Ventilzweig 2 angeordnet. Der durch die jeweiligen Leistungshalbleiterventile 2 fließende Strom ist $i_{p1}$, $i_{p2}$, $i_{p3}$, $i_{N1}$, $i_{N2}$ und $i_{N3}$ bezeichnet. Die an den Leistungshalbleiterventilzweigen insgesamt abfallende Spannung ist mit $u_{p1}$, $u_{p2}$, $u_{p3}$ sowie $u_{n1}$, $u_{N2}$ und $u_{N3}$. Die Gleichspannungsanschlüsse 4 sind Teil eines Gleichspannungskreises 6, in dem ein Gleichstrom $i_d$ fließt.

Der in Figur 1 oben dargestellte positive Pol des Gleichspannungskreises 6 ist mit dem unten dargestellten negativen Pol über einen Ohmschen Widerstand $R_D$, eine Induktivität $L_D$ sowie einen schematisch angedeuteten Kondensator 7 verbunden. Die zwischen dem positiven Pol und dem negativen Pol des Gleichspannungskreises 6 abfallende Spannung ist $U_{D0}$, die an dem Kondensator 7 abfallende Spannung $U_q$.

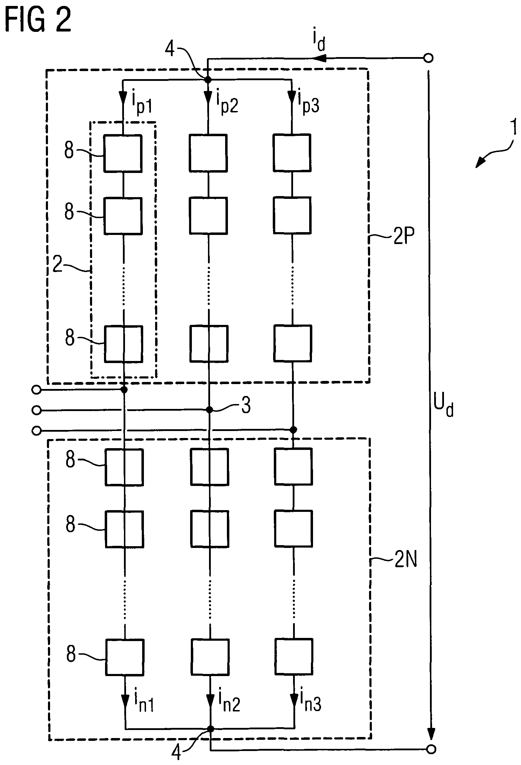

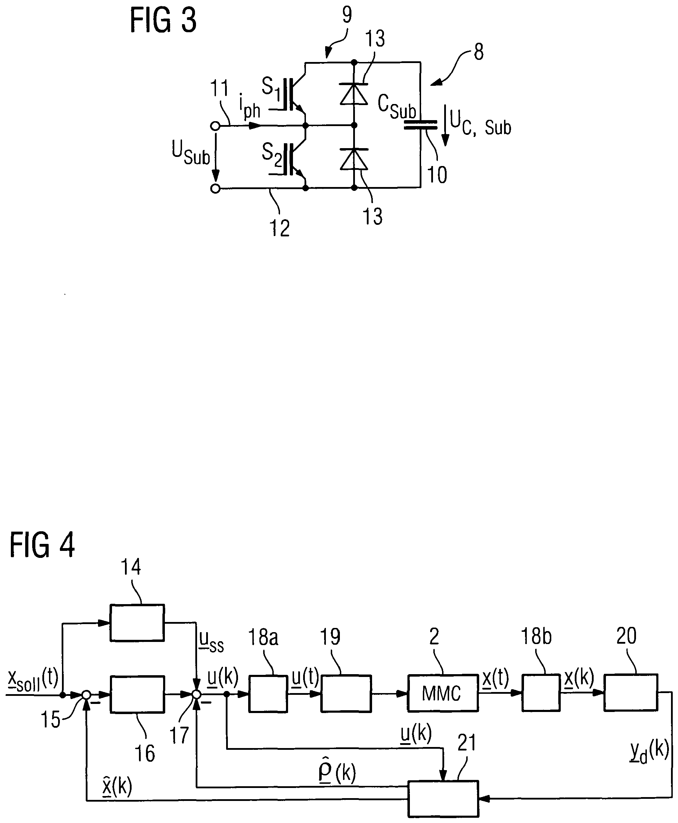

In Figur 2 ist der Aufbau der Leistungshalbleiterventilzweige 2 genauer dargestellt. Es ist erkennbar, dass jeder Leistungshalbleiterventilzweig 2 eine Reihenschaltung von unipolaren Submodulen 8 aufweist, deren Aufbau in Figur 3 verdeutlicht ist. Es ist erkennbar, dass jedes Submodul 8 über eine Leistungshalbleiterschaltung 9 verfügt, die mit einem Submodulkondensator 10 verbunden ist, so dass an Ausgangsklemmen 11 und 12 jedes Submoduls 8 entweder die an dem Submodulkondenstor 10 abfallende Spannung $u_{c,sub}$ oder aber eine Nullspannung erzeugbar ist. Dazu weist die Leistungshalbleiterschaltung 9 zwei abschaltbare Leistungshalbleiter S1 und S2 auf, die für hohe Spannungen ausgelegt und beispielsweise als IGBT, GTO oder dergleichen realisiert sind. Jedem abschaltbaren Leistungshalbleiter S1 beziehungsweise S2 ist eine Freilaufdiode 13 gegensinnig parallel geschaltet.

Figur 4 zeigt ein Ausführungsbeispiel des erfindungsgemäßen Verfahrens zum Regeln eines Umrichters gemäß den Figuren 1 bis 3. Wie bei Regelungen allgemein üblich, werden auch hier Sollwerte mit Istwerten verglichen oder mit anderen Worten die Differenz zwischen einem Sollwert und einem Istwert gebildet, wobei anschließend die auf diese Weise gewonnene Regeldifferenz einer Reglungseinheit zugeführt wird, die in den dargestellten Ausführungsbeispielen eine Vorsteuereinheit 14 und einen Regler 16 umfasst. Die Regelgrößen des in Figur 1 gezeigten Umrichters sind die im Umrichter 1 fließenden Ströme. Hierbei ist es jedoch ausreichend, lediglich fünf Ströme zu betrachten, da sich die übrigen in Figur 1 gezeigten Ströme aus den bekannten fünf Strömen berechnen lassen. Sämtliche Regelgrößen werden in einem Zustandsvektor $\underline{x}(k)$ zusammengefasst. Entsprechendes gilt für die Sollgrößen, die mit dem Vektor $\underline{x}_{soll}(k)$ vorgegeben sind. Der Sollvektor $\underline{x}_{Soll}(k)$ wird zum einen der Vorsteuereinheit 14 zugeführt, welche ausgehend von den Sollgrößen $\underline{x}_{Soll}(k)$ stationäre Stellspannungen $\underline{u}_{SS}$ berechnet. Mit Hilfe der Addiereinheit 15 wird die Differenz zwischen den Sollwerten $\underline{x}_{Soll}(k)$ und den Zustandsistwerten $\hat{\underline{x}}(k)$, die hier ausschließlich aus Stromistwerten bestehen, gebildet, wobei Regeldifferenzwerte erzeugt werden, die dem Regler 16 zugeführt werden. Ausgangsseitig stellt der Regel 16 Stellspannungen für Leistungshalbleiterventilzweige 2 des Umrichters 1 gemäß Figur 1 bereit. Zu diesen Stellspannungen werden die stationären Stellspannungen $\underline{u}_{ss}$ mittels eines Addierers 17 hinzuaddiert und ein Störungsistvektor $\hat{\underline{p}}(k)$ subtrahiert, wobei in einem Abtastschritt k der Stellspannungsvektor $\underline{u}(k)$ erzeugt wird. Die Stellspannungen des Stellspannungsvektors $\underline{u}(k)$ werden nun mit Hilfe eines Digital/Analogwandlers 18a in analoge Stellspannungen $\underline{u}(t)$ umgewandelt und schließlich einer Steuerelektronik 19 zugeführt, welche in Abhängigkeit der jeweiligen Stellspannung $\underline{u}(k)$ Steuersignale für die Leistungshalbleiter S1, S2 eines jeden Leistungshalbleiterventilzweiges 2 erzeugt (vgl. Figuren 1 und 3). Die Steuersignale werden schließlich dem Umrichter 1 zugeführt, woraufhin sich die gewünschten Ströme einstellen, die wiederum durch den Zustandsvektor $\underline{x}(k)$ symbolisiert sind. Die Umrichterströme werden mittels nicht dargestellter Sensoren gemessen, beispielsweise mit Hilfe von Stromwandlern, wobei der Analog/Digitalwandler 18b das gemessene Signal des Stromwandlers abtastet und die dabei gewonnen Abtastwerte digitalisiert, so dass sich zum Abtastzeitpunkt *k* der Zustandsvektor $\underline{x}(k)$ ergibt, der beispielsweise fünf unterschiedliche Ströme umfasst, so dass der Umrichter 1 vollständig charakterisiert ist.

In Figur 4 ist ferner eine Störungseinheit 20 gezeigt, die in Form eines Ersatzschaltbildes berücksichtigt, dass die erfassten Strommesswerte mit Störungen behaftet sind. $\underline{y}_d(k)$ repräsentiert daher einen Zustandsvektor mit gestörten Strommesswerten. Dieser Zustandsvektor $\underline{y}_d(k)$ wird einer Beobachtungseinheit 21 zugeführt, die als zweites Eingangssignal die Stellspannungen $\underline{u}(k)$ erhält. Die Beobachtereinheit 21, auf die später noch genauer eingegangen werden wird, prädiziert mit Hilfe eines mathematischen Modells des Umrichters 1, das Störungen berücksichtigt, ungestörte Stromistwerte $\hat{\underline{x}}(k)$ und stellt diese ausgangsseitig bereit. Der Regelungseinheit 16 werden dann die ungestörten Stromistwerte $\hat{\underline{x}}(k)$ zur Verfügung gestellt.

Die Beobachtungseinheit 21 erzeugt an ihrem Ausgang ferner Störungsistwerte $\underline{p}(k)$, die in dem Addierer 17 in der Weise verarbeitet werden, dass sie subtrahiert werden.

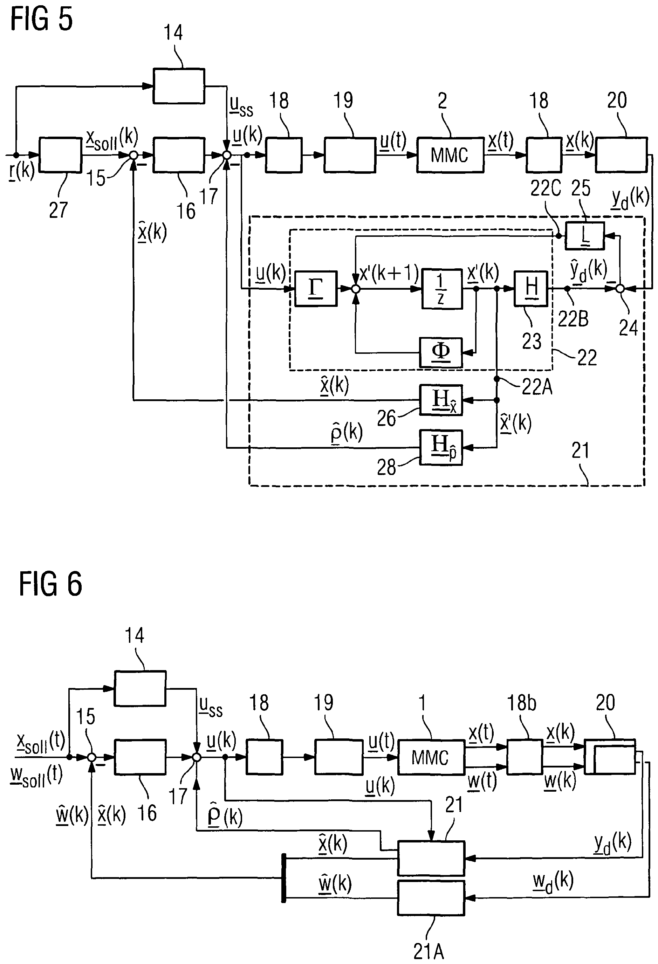

Figur 5 verdeutlicht ein weiteres Ausführungsbeispiel der Erfindung, das dem in Figur 4 gezeigten Ausrührungsbeispiel weitestgehend entspricht. Allerdings weist der die Zustandssollgrößen umfassende Vektor $\underline{x}_{Soll}(k)$ neben reinen Sollstromgrößen $\underline{r}(k)$ auch weitere Zustandsgrößen auf, die von einer Vorfiltereinheit 27 aus den Sollstromgrößen $\underline{r}(k)$ berechnet werden. Der Vorsteuereinheit 14 werden nur die Sollstromgrößen $\underline{r}(k)$ zugeführt. Der Ausgang der Vorfiltereinheit 27 umfasst die Zustandssollgrößen $\underline{x}_{Soll}(k)$. Die weiteren Verfahrensschritte laufen analog zu dem in Figur 4 gezeigten Ausführungsbeispiel ab. Der Aufbau der Beobachtereinheit 21 ist jedoch genauer dargestellt.

Es ist erkennbar, dass die Beobachtungseinheit 21 eine Modelleinheit 22 aufweist, mit deren Hilfe der Umrichter 1 modelliert wird. An einem Ausgang 22A der Modelleinheit 22 wird ein Vektor $\hat{\underline{x}}'(k)$ bereitgestellt, der sowohl die ungestörten Stromistwerte $\hat{\underline{x}}(k)$ als auch mit Störungen behaftete Strommodellmesswerte umfasst. An einem weiteren Ausgang 22B der Modelleinheit 22 treten Strommodellmesswerte $\hat{\underline{y}}_d(k)$ auf, die reell gemessenen Strommesswerten $\underline{y}_d(k)$ entsprechen. Dabei schneidet die Einheit 23 aus dem Vektor $\hat{\underline{x}}'(k)$ nur die gestörten Strommodellmesswerte $\hat{\underline{y}}_d(k)$ heraus. Diese Strommodellmesswerte $\hat{\underline{y}}_d(k)$ werden dann durch einen Addierer 24 von den real gemessenen mit Störungen behafteten Messwerten $\underline{y}_d(k)$ abgezogen werden. Die auf diese Weise gewonnene Modellmesswertabweichung wird schließlich einer Rückführungseinheit 25 zugeführt, welche eine Verstärkungs- oder Rückführungsmatrix $\underline{L}$ auf den Vektor der Modellmesswertabweichung anwendet. Hierdurch werden die Modellmesswertabweichungen verstärkt. Die verstärkten Modellmesswertabweichungen werden der Modelleinheit 22 schließlich an einem Eingang 22C zugeführt, wobei die Modellierung so erfolgt, dass $\hat{\underline{y}}_d(k)$ und $\underline{y}_d(k)$ konvergieren. Mit anderen Worten erfolgt die Modellierung des Umrichters so, dass die Modellmesswertabweichung minimal wird.

Zum Herausschneiden der ungestörten Stromistwerte $\hat{\underline{x}}(k)$ aus dem auch gestörte Messwerte umfassenden Zustandsvektor $\hat{\underline{x}}'(k)$ am Ausgang 22A der Modelleinheit 22 ist eine Einheit 26 vorgesehen. Der Ausgang der Einheit 26 $\hat{\underline{x}}'(k)$ wird dem Addierer 15 zugeführt und somit der weiteren Regelung zugrunde gelegt.

Aus dem Zustandsvektor $\hat{\underline{x}}'(k)$ werden mittels einer weiteren Einheit 27 auch Störungsistwerte $\hat{\underline{\rho}}(k)$ ausgeschnitten und dem Addierer 17 so zugeführt, dass dort eine Subtraktion stattfindet.

Im Folgenden wird auf das verwendete mathematische Modell eingegangen. Zur Modellierung von Störungen muss der Zustandsvektor, also der Vektor mit den ungestörten Stromistwerten, um die Störungen erweitert werden.

Dabei wird zunächst die herkömmliche Zustandsgleichung um eine Störung $\underline{v}$ erweitert, welche über die Eingangsmatrix $\underline{B}$ auf den Eingang im System wirkt. Es gilt:

$$\dot{\underline{x}} = \underline{A}\underline{x} + \underline{B}\underline{u} + \underline{B}\underline{v} \qquad (1)$$

in der $\underline{x}$ die Zustandsvariable und $\underline{A}$ die Systemmatrix bezeichnen.

Zusätzlich soll das System stationär genau einer konstanten Sollgröße $\underline{r}(k)$ folgen (vgl. Fig. 5). Für den Regelfehler $\underline{e}$ lässt sich dann die folgende Gleichung

$$\underline{e} = \underline{H}\underline{x} - \underline{r}(\mathrm{k}) \qquad (2)$$

aufstellen, in der $\underline{H}$ die Ausgangsmatrix des Systems bei diskretisierter Betrachtung bezeichnet. Um einen Beobachter für die Störgrößen entwerfen zu können, ist ein mathematisches Modell der Störung nötig. Eine konstante Störung $\underline{v}$ lässt sich problemlos durch die Gleichung (3) und die Sollgröße $\underline{r}(k)$ durch (4) beschreiben.

$$\dot{\underline{v}} = 0 \qquad (3)$$

$$\dot{\underline{r}} = 0 \qquad (4)$$

Dabei ist die Gleichung (3) in ihrer Aussage identisch mit der Angabe der Systemmatrizen:

$$\underline{A} = 0 \qquad \underline{B} = 0 \qquad \underline{C} = 1 \qquad (5)$$

Wenn nun $v$ und $r$ die gleiche Gleichung erfüllen wie im obigen Fall, so kann für das System ein äquivalentes Eingangssignal $\underline{\rho}$ gefunden werden, welches ebenfalls die Gleichung erfüllt. Es ergibt sich:

$$\dot{\mathrm{x}} = \underline{A}\underline{x} + \underline{B}(\underline{u} + \underline{\rho}) \qquad (6)$$

und

$$\underline{e} = \underline{H}\underline{x} \qquad (7)$$

Nun wird der Zustandsvektor $\underline{x}$ um $\underline{\rho}$ zu

$$\underline{x}_\rho = \begin{pmatrix} \rho \\ \underline{x} \end{pmatrix} \qquad (8)$$

erweitert, wobei für $\underline{\rho}$ gilt:

$$\dot{\underline{\rho}} = 0 \qquad\qquad (9)$$

Komplizierter ist die Situation, wenn für die Beobachtungseinheit 22 ein Störgrößenmodell für das Mit-, Gegen- und Nullsystem entworfen werden soll, um Gleichstromasymmetrien beziehungsweise Gleichkomponenten auszuregeln. Bekanntermaßen erscheinen diese Gleich-Störgrößen als 50 Hz- und bei Gegensystemen als 100 Hz-Störungen nach einer Park-Transformation.

Also wird zur Beobachtung dieser Störungen ein entsprechendes Modell benötigt. Wie weiter oben beschrieben, gilt für die Modellierung des äquivalenten Eingangssignals $\underline{\rho}$ das gleiche Modell. Es werden dann zum einen Störungen dieser Signalform stationär genau ausgeregelt, zum anderen werden Sollwerte dieser Signalform stationär genau eingeregelt. Das Schwingungsmodell für die Grundkreisfrequenz $\omega_0$ lautet im Zustandsraum:

$$A_{\omega 0} = \begin{pmatrix} 0 & 1 \\ -\omega_0^2 & 0 \end{pmatrix}, \qquad \underline{B}_{\omega_0} = \begin{pmatrix} 0 \\ 0 \end{pmatrix}, \qquad \underline{C}_{\omega_0} = \begin{pmatrix} 1 & 0 \end{pmatrix} \qquad\qquad (10)$$

Die Eingangsmatrix $\underline{B}_{\omega 0}$ ist null, weil die Störung nicht beeinflusst werden kann, also nicht steuerbar ist. Nun lässt sich ein Modell für den Beobachterentwurf aufstellen:

$$\dot{x}_\rho = \underline{A}_\rho \underline{x}_\rho + \underline{B}_\rho \underline{u}, \qquad \underline{e} = \underline{C} x_\rho \qquad\qquad (11)$$

Dabei gilt:

$$\underline{x}_\rho = \begin{pmatrix} \rho \\ \underline{x} \end{pmatrix}, \qquad \rho = \begin{pmatrix} \rho \\ \dot{\underline{\rho}} \end{pmatrix} \qquad\qquad (12)$$

Danach werden die Systemmatrizen aufgestellt, welche das System- und Störgrößenmodell enthalten:

$$\underline{A}_\rho = \begin{pmatrix} 0 & 1 & \underline{0} \\ -\omega_0^2 & 0 & \underline{0} \\ \underline{B} & \underline{0} & \underline{A} \end{pmatrix}, \qquad \underline{B}_\rho = \begin{pmatrix} 0 \\ 0 \\ \underline{B} \end{pmatrix}, \qquad \underline{C}_\rho = \begin{pmatrix} 0 & 0 & \underline{C} \end{pmatrix} \qquad (13)$$

Nun erweitert man das Modell auf alle Frequenzbereiche. Für $\underline{\rho}$ wird angenommen:

$$\rho = \begin{pmatrix} \overline{\underline{\rho}} \\ \underline{\rho}_{\omega_0} \\ \underline{\rho}_{2\omega_0} \\ \dot{\underline{\rho}}_{\omega_0} \\ \dot{\underline{\rho}}_{2\omega_0} \end{pmatrix} \qquad\qquad (14)$$

Für die erweiterten Systemmodellmatrizen gilt dann:

$$\underline{A}_\rho = \begin{pmatrix} 0 & 0 & 0 & 0 & 0 & \underline{0} \\ 0 & 0 & 0 & 1 & 0 & \underline{0} \\ 0 & 0 & 0 & 0 & 1 & \underline{0} \\ 0 & -\omega_0^2 & 0 & 0 & 0 & \underline{0} \\ 0 & 0 & -4\omega_0^2 & 0 & 0 & \underline{0} \\ \underline{B} & \underline{B} & \underline{B} & \underline{0} & \underline{0} & \underline{A} \end{pmatrix}, \quad \underline{B}_\rho = \begin{pmatrix} 0 \\ 0 \\ 0 \\ 0 \\ 0 \\ B \end{pmatrix}, \quad \underline{C}_\rho = \begin{pmatrix} 0 & 0 & 0 & 0 & 0 & C \end{pmatrix}$$

$$(15)$$

Das Modell aus Gleichung (15) kann für den hier behandelten Umrichter erweitert werden. Zunächst werden in $\underline{\rho}$ alle fünf Eingangsgrößen zusammengefasst:

$$\underline{\rho} = \begin{pmatrix} \overline{\underline{\rho}} \\ \underline{\rho}_{\omega_0} \\ \underline{\rho}_{2\omega_0} \\ \dot{\underline{\rho}}_{\omega_0} \\ \dot{\underline{\rho}}_{2\omega_0} \end{pmatrix} \qquad (16)$$

Die Elemente von $\underline{\rho}$ enthalten dann jeweils noch mal fünf Elemente, stellvertretend für die Störungen auf den fünf Stellgrößen. Aus dem Systemmodell wird - mit "$\underline{I}$" als Einheitsmatrix:

$$\underline{A}_\rho = \begin{pmatrix} \underline{0} & \underline{0} & \underline{0} & \underline{0} & \underline{0} & \underline{0} \\ \underline{0} & \underline{0} & \underline{0} & \underline{I} & \underline{0} & \underline{0} \\ \underline{0} & \underline{0} & \underline{0} & \underline{0} & \underline{I} & \underline{0} \\ \underline{0} & \underline{\omega}_0 & \underline{0} & \underline{0} & \underline{0} & \underline{0} \\ \underline{0} & \underline{0} & \underline{\omega}_1 & \underline{0} & \underline{0} & \underline{0} \\ \underline{B} & \underline{B} & \underline{B} & \underline{0} & \underline{0} & \underline{A} \end{pmatrix}, \quad \underline{B}_\rho = \begin{pmatrix} \underline{0} \\ \underline{0} \\ \underline{0} \\ \underline{0} \\ \underline{0} \\ \underline{B} \end{pmatrix}, \quad \underline{C}_\rho = \begin{pmatrix} \underline{0} & \underline{0} & \underline{0} & \underline{0} & \underline{0} & \underline{C} \end{pmatrix} \quad (17)$$

wobei

$$\underline{\omega}_0 = -\omega_0^2 \cdot \underline{I} \quad \text{und} \quad \underline{\omega}_1 = -4\omega_0^2 \cdot \underline{I} \qquad (18)$$

gelten.

Nach dem gleichen Prinzip können neben Mit- und Gegensystem auch Oberschwingungen durch Erweiterung des Störmodells kompensiert werden. Wobei hier exemplarisch

$$\underline{\omega}_2 = -16 \cdot \omega_0^2 \cdot \underline{I}, \qquad \underline{\omega}_3 = -25\omega_0^2 \cdot \underline{I} \quad \text{und} \quad \underline{\omega}_4 = -36\omega_0^2 \cdot \underline{I} \qquad (19)$$

betrachtet werden.

$$\underline{A}_\rho = \begin{pmatrix} \underline{0} & \underline{0} & \cdots & \underline{0} & \underline{0} & \cdots & \underline{0} & \underline{0} \\ \underline{0} & \underline{0} & \cdots & \underline{0} & \underline{I} & \cdots & \underline{0} & \underline{0} \\ \underline{0} & \underline{0} & \cdots & \underline{0} & \underline{0} & \ddots & \underline{0} & \underline{0} \\ \underline{0} & \underline{0} & \cdots & \underline{0} & \underline{0} & \cdots & \underline{I} & \underline{0} \\ \underline{0} & \underline{\omega}_0 & \cdots & \underline{0} & \underline{0} & \cdots & \underline{0} & \underline{0} \\ \underline{0} & \underline{0} & \ddots & \underline{0} & \underline{0} & \ddots & \underline{0} & \underline{0} \\ \underline{0} & \underline{0} & \cdots & \underline{\omega}_4 & \underline{0} & \cdots & \underline{0} & \underline{0} \\ \underline{B} & \underline{B} & \cdots & \underline{B} & \underline{0} & \cdots & \underline{0} & \underline{A} \end{pmatrix} \qquad (20)$$

Dieses Modell kann nach bekannten Methoden diskretisiert werden, was hier aber im Detail nicht mehr aufgeführt wird, so dass man ein System $\underline{\Phi}_\rho$, $\underline{\Gamma}_\rho$, $\underline{H}_\rho$ mit zeitdiskreten Modellparametern erhält, die einer praktischen Verarbeitung in einer Datenverarbeitungsanlage zugänglich sind. Dabei entspricht der zeitdiskrete Modellparameter $\underline{\Phi}_\rho$ dem kontinuierlichen Systemparameter $\underline{B}$, die zeitdiskrete Eingangsmatrix $\underline{\Gamma}_\rho$ der Eingangsmatrix $\underline{B}$ und der zeitdiskrete Modellparameter $\underline{H}_\rho$ dem Systemmodellparameter $\underline{C}$.

Zur Erläuterung des erfindungsgemäß weitergebildeten Verfahrens mit zusätzlicher Ausregelung von Verzögerungen wird nochmals Bezug genommen auf die Figur 4 und zunächst eine Situation angenommen, bei der einzig und allein Verzögerungen ausgeregelt werden sollen; in diesem Fall symbolisiert der Block 20 Verzögerungen, die sich unvermeidlich zwischen dem eigentlichen Messzeitpunkt der Ströme des Umrichters 1 und der Weiterverarbeitung und Übertragung der Strommesswerte ergeben. Diese Verzögerungen werden als Messverzögerungen oder Messtotzeiten bezeichnet. $\underline{y}_d(k)$ repräsentiert hier also dann einen Zustandsvektor mit verzögerten Strommesswerten. Die verzögerten Strommesswerte $\underline{y}_d(k)$ werden der Beobachtungseinheit 21 zugeführt, die als zweites Eingangssignal die Stellspannungen $\underline{u}(k)$ erhält. Die Beobachtereinheit 21, auf die später noch genauer eingegangen werden wird, prädiziert mit Hilfe eines mathematischen Modells des Umrichters 1, das sowohl Stell- als auch die Messverzögerungen berücksichtigt, die unverzögerten Stromistwerte $\underline{\hat{x}}(k)$ und stellt diese ausgangsseitig bereit. Der Regelungseinheit 16 werden dann die unverzögerten Stromistwerte $\underline{\hat{x}}(k)$ zur Verfügung gestellt.

Unter Bezugnahme auf Figur 5 ergibt sich, dass die Modelleinheit 22 einen Vektor $\underline{\hat{x}}'(k)$ bereitstellt, der sowohl die unverzögerten Stromistwerte $\underline{\hat{x}}(k)$, als auch Strommodellmesswerte umfasst, die den Stromistwerten entsprechen, jedoch mit Verzögerungen behaftet sind $\underline{\hat{y}}_d(k)$. Mit anderen Worten entsprechen Strommodellmesswerte $\underline{\hat{y}}_d(k)$ reell gemessenen Strommesswerten $\underline{y}_d(k)$. Die Einheit 23 schneidet aus dem Ausgang der Modelleinheit 22 nur die verzögerten Strommodellmesswerte $\underline{\hat{y}}_d(k)$ heraus, wobei die Strommodellmesswerte $\underline{\hat{y}}_d(k)$ durch den Addierer 24 von den real gemessenen mit Verzögerungen behafteten Messwerten $\underline{y}_d(k)$ abgezogen werden. Die auf diese Weise gewonnene Modellmesswertabweichung wird schließlich der Rückführungseinheit 25 zugeführt, welche eine Verstärkungs- oder Rückführungsmatrix $\underline{L}$ auf den Vektor der Modellmesswertabweichung anwendet. Hierdurch werden die Modellmesswertabweichungen verstärkt. Die verstärkten Modellmesswertabweichungen werden der Modelleinheit 22 schließlich als Eingang zugeführt, wobei die Modellierung so erfolgt, dass $\underline{\hat{y}}_d(k)$ und $\underline{y}_d(k)$ konvergieren. Mit anderen Worten erfolgt die Modellierung des Umrichters so, dass die Modellmesswertabweichung minimal wird.

Zum Herausschneiden der unverzögerten Stromistwerte $\underline{\hat{x}}(k)$ aus dem auch verzögerte Messwerte umfassenden Zustandsvektor $\underline{\hat{x}}'(k)$ als Ausgang der Modelleinheit 22 ist die Einheit 26 vorgesehen. Der Ausgang der Einheit 26 $\underline{\hat{x}}'(k)$ wird dem Addierer 15 zugeführt und somit der weiteren Regelung zugrunde gelegt.

Im Folgenden wird auf das verwendete mathematische Modell eingegangen. Zur Modellierung von Messverzögerungen muss der Zustandsvektor, also der Vektor mit den unverzögerten Stromistwerten, um die verzögerten Messwerte erweitert werden.

$$\underline{\hat{x}}'(k) = \begin{pmatrix} \underline{\hat{x}}_k \\ \underline{\hat{y}}_{1d} \\ \vdots \\ \underline{\hat{y}}_{nd} \end{pmatrix} \qquad (21)$$

sei $\underline{\hat{y}}_d(k)$ ein Vektor der verzögerten Messgrößen, so gilt für die Verzögerung von einem Abtastschritt:

$$\underline{y}_{1d}(k+1) = \underline{y}(k) \tag{22}$$

Bei Verzögerungen von mehr als einem Abtastschritt gilt weiter

$$\underline{y}_{2d}(k+1) = \underline{y}_{1d}(k) \tag{23}$$

und

$$\underline{y}_d(k+1) = \underline{y}_{nd}(k) \tag{24}$$

Hieraus lässt sich das allgemeine Modell ableiten:

$$\underline{x}(k+1) = \underline{\Phi}_d\,\underline{x}(k) + \underline{\Gamma}_d\underline{u}(k) \tag{25}$$

$$\underline{y}_d(k) = \underline{H}_d\,\underline{x}(k)$$

Weiterhin gelten - mit "I" wiederum als Einheitsmatrix:

$$\underline{\Phi}_d = \begin{pmatrix} \underline{\Phi} & \underline{0} & \dots & \underline{0} \\ \underline{H} & \underline{0} & \dots & \underline{0} \\ \underline{0} & \underline{I} & \dots & \underline{0} \\ \vdots & \dots & \ddots & \underline{0} \end{pmatrix} \tag{26}$$

$$\underline{\Gamma}_d = \begin{pmatrix} \underline{\Gamma} \\ \underline{0} \\ \vdots \\ \underline{0} \end{pmatrix}$$

$$\underline{H}_d = \begin{pmatrix} \underline{0} & \underline{0} & \dots & \underline{I} \end{pmatrix}$$

Somit steht ein Streckenmodell zur Verfügung, mit dessen Hilfe die Beobachtungseinheit 21 entworfen werden kann.

Die Modelleinheit 22 der Beobachtungseinheit 21 verwendet zur Modellierung des Umrichters 2 das oben genannte Streckenmodell gemäß

$$\hat{\underline{x}}'(k+1) = \underline{\Phi}\hat{\underline{x}}'(k) + \underline{\Gamma}\underline{u}(k) \tag{27}$$

Der Beobachtungsfehler kann nun definiert werden zu

$$\tilde{\underline{x}} = \underline{x} - \hat{\underline{x}}' \tag{28}$$

Damit die Strommodellmesswerte auch gegen die gemessenen realen Strommesswerte konvergieren, wird eine Rückführungsmatrix L eingeführt, so dass sich folgende Gleichung ergibt:

$$\hat{\underline{x}}'(k+1) = \underline{\Phi}\hat{\underline{x}}'(k) + \underline{\Gamma}\underline{u}(k) + \underline{L}\left(\underline{y}(k) - \underline{H}\hat{\underline{x}}'(k)\right) \tag{29}$$

Zum Entwurf der Rückführungsmatrix muss die Fehlergleichung

$$\tilde{\underline{x}}(k+1) = (\underline{\Phi} - \underline{LH})\tilde{\underline{x}}(k),\qquad(30)$$

wobei die Dynamik ($\Phi$-$\underline{L}$H) so gewählt wird, dass die Strommodellmesswerte $\hat{\underline{y}}_d(k)$ auch gegen die gemessenen Messwerte $\underline{y}_d(k)$ konvergieren und zwar schneller als die Streckendynamik.

Zur Modellierung von Stellverzögerungen, die von der Steuerelektronik 19 erzeugt werden wird folgendes System angewandt:

$$\underline{x}(k+1) = \underline{\Phi}\underline{x}(k) + \underline{\Gamma}_0 u(k-(l-1)) + \underline{\Gamma}_1 \underline{u}(k-1).\qquad(31)$$

Für die Stellverzögerung $\tau$ gilt

$$\tau = (l-1)\cdot T + \tau'\qquad(32)$$

Die Systemmatrizen lauten:

$$\underline{\Phi} = e^{\underline{A}T}$$

$$\underline{\Gamma}_0 = \int_0^{h-\tau'} e^{\underline{A}s}\,ds\,\underline{B}$$

$$\underline{\Gamma}_1 = e^{\underline{A}(T-\tau')}\int_0^{\tau'} e^{\underline{A}s}\,ds\,\underline{B}\qquad(33)$$

$$
\begin{pmatrix}
\underline{x}(k+1) \\
\underline{u}(k-(l-1)) \\
\underline{u}(k-(l-2)) \\
\underline{u}(k-1) \\
\underline{u}(k)
\end{pmatrix}
=
\begin{pmatrix}
\underline{\Phi} & \underline{\Gamma}_1 & \underline{\Gamma}_0 & \underline{0} & \underline{0} \\
\underline{0} & \underline{0} & \underline{I} & \underline{0} & \underline{0} \\
\underline{0} & \underline{0} & \underline{0} & \underline{I} & \underline{0} \\
\underline{0} & \underline{0} & \underline{0} & \underline{0} & \underline{I} \\
\underline{0} & \underline{0} & \underline{0} & \underline{0} & \underline{0}
\end{pmatrix}
\begin{pmatrix}
\underline{x}(k) \\
\underline{u}(k-1) \\
\underline{u}(k-3) \\
\underline{u}(k-2) \\
\underline{u}(k-1)
\end{pmatrix}
+
\begin{pmatrix}
\underline{0} \\
\underline{0} \\
\underline{0} \\
\underline{0} \\
\underline{I}
\end{pmatrix}
\underline{u}(k)
$$

Der Umrichter kann vollständig mit Mess- und Stellverzögerungen modelliert werden, indem man die oben gezeigten Modellierungen kombiniert. Es ergibt sich als direkte Darstellung der Differenzgleichung des modellierten Systems:

$$\underline{x}_\tau^d(k+1) = \underline{\Phi}_\tau^d \underline{x}_\tau^d(k) + \underline{\Gamma}_\tau^d u(k)\qquad(34)$$

$$\underline{y}_d = \underline{H}_\tau^d \underline{x}_\tau^d(k)$$

Die Systemmatrizen werden hier beispielhaft für eine Messverzögerung d in Abtastschritten und eine Stellverzögerung von $\tau=(l-1)\cdot T + \tau'$ erstellt, wobei auch nichtganzzahlige Stellverzögerungen modelliert werden.

$$\underline{\Phi}_r^d = \begin{pmatrix} \underline{\Phi} & \underline{0} & \underline{0} & \cdots & \underline{0} & \underline{\Gamma}_1 & \underline{\Gamma}_0 & \cdots & \underline{0} \\ \underline{H} & \underline{0} & \underline{0} & \cdots & \underline{0} & \underline{0} & \underline{0} & \cdots & \underline{0} \\ \underline{0} & \underline{I} & \underline{0} & \cdots & \underline{0} & \underline{0} & \underline{0} & \cdots & \underline{0} \\ \underline{0} & \underline{0} & \underline{I} & \cdots & \underline{0} & \underline{0} & \underline{0} & \cdots & \underline{0} \\ \vdots & \vdots & \vdots & \ddots & \vdots & \vdots & \vdots & \ddots & \vdots \\ \underline{0} & \underline{0} & \underline{0} & \cdots & \underline{I} & \underline{0} & \underline{0} & \cdots & \underline{0} \\ \underline{0} & \underline{0} & \underline{0} & \cdots & \underline{0} & \underline{0} & \underline{I} & \cdots & \underline{0} \\ \vdots & \vdots & \vdots & \cdots & \vdots & \vdots & \vdots & \ddots & \vdots \\ \underline{0} & \underline{0} & \underline{0} & \cdots & \underline{0} & \underline{0} & \underline{0} & \cdots & \underline{I} \\ \underline{0} & \underline{0} & \underline{0} & \cdots & \underline{0} & \underline{0} & \underline{0} & \cdots & \underline{0} \end{pmatrix} \tag{35}$$

$$\underline{x}_r^d = \begin{pmatrix} \hat{\underline{x}}_k \\ \underline{y}_k \\ \underline{y}_{k-1} \\ \vdots \\ \underline{y}_{k-d} \\ \underline{u}(k-l+1) \\ \vdots \\ \underline{u}(k-1) \\ \underline{u}(k) \end{pmatrix}$$

$$\underline{\Gamma}_r^d = \begin{pmatrix} \underline{0} \\ \underline{0} \\ \underline{0} \\ \vdots \\ \underline{0} \\ \underline{0} \\ \vdots \\ \underline{0} \\ \underline{I} \end{pmatrix} \tag{36}$$

$$\underline{H}_r^d = \begin{pmatrix} \underline{0} & \underline{0} & \underline{0} & \cdots & \underline{I} & \underline{0} & \cdots & \underline{0} \end{pmatrix}$$

Für den mehrstufigen Umrichter gemäß Figur 1 wird l=2 und d=4 angenommen. Es ergeben sich dann folgende Matrizen:

$$\Phi_{MMC} = \begin{pmatrix} \underline{\Phi} & \underline{0} & \underline{0} & \underline{0} & \underline{0} & \underline{\Gamma}_1 & \underline{\Gamma}_0 \\ \underline{H} & \underline{0} & \underline{0} & \underline{0} & \underline{0} & \underline{0} & \underline{0} \\ \underline{0} & \underline{I} & \underline{0} & \underline{0} & \underline{0} & \underline{0} & \underline{0} \\ \underline{0} & \underline{0} & \underline{I} & \underline{0} & \underline{0} & \underline{0} & \underline{0} \\ \underline{0} & \underline{0} & \underline{0} & \underline{I} & \underline{0} & \underline{0} & \underline{0} \\ \underline{0} & \underline{0} & \underline{0} & \underline{0} & \underline{0} & \underline{0} & \underline{I} \\ \underline{0} & \underline{0} & \underline{0} & \underline{0} & \underline{0} & \underline{0} & \underline{0} \end{pmatrix}$$

$$\hat{\underline{x}}'_{MMC} = \begin{pmatrix} \hat{\underline{x}}_k \\ \underline{y}_k \\ \underline{y}_{k-1} \\ \underline{y}_{k-2} \\ \underline{y}_{k-3} \\ \underline{u}(k-1) \\ \underline{u}(k) \end{pmatrix} \qquad (37)$$

$$\underline{\Gamma}_{MMC} = \begin{pmatrix} \underline{0} \\ \underline{0} \\ \underline{0} \\ \underline{0} \\ \underline{0} \\ \underline{0} \\ \underline{I} \end{pmatrix}$$

$$\underline{H}_{MMC} = \begin{pmatrix} \underline{0} & \underline{0} & \underline{0} & \underline{0} & \underline{I} & \underline{0} & \underline{0} \end{pmatrix}$$

Mit der auf dieser Weise möglichen Modellierung des Umrichters können die unverzögerten Stromistwerte berechnet werden.

Dies vorausgesetzt, gelangt man zu einem Systemmodell, mit dem eine Kompensation von Störgrößen und zusätzlich Messwertverzögerungen erfolgt, in dem man die beiden oben beschriebenen Beobachtermodelle miteinander kombiniert, wobei sich die letzte Zeile/Spalte aus dem zeitdiskreten Modellparameter $\Phi_\rho$ - entsprechend Systemparameter $\underline{A}_\rho$ gemäß Gleichungen (13) bzw. (15) - mit der ersten Zeile/Spalte aus dem zeitdiskreten Modellparameter $\underline{\Phi}_d$ - vgl. Gleichung (26) überschneiden.

Seien $\Phi_d^{\tau'}$ und $\Phi'_\rho$ die Matrizen ohne die erwähnte Zeile/Spalte, so kann man folgende kompakte Schreibweise für das Beobachtungsmodell $\Phi_b$ wählen:

$$\Phi_b = \begin{pmatrix} \Phi'_\rho & \vdots & \\ \cdots & \Phi & \cdots \\ & \vdots & \Phi_d^{\tau'} \end{pmatrix}, \qquad \Gamma_b = \begin{pmatrix} \Gamma'_\rho \\ 0 \\ \Gamma_d^{\tau'} \end{pmatrix} \qquad (38)$$

Der Beobachterentwurf ist danach Standard, es gilt die Beobachtungsgleichung:

$$\hat{x}(k+1) = \Phi_b\,\underline{\hat{x}}(k) + \Gamma_b\,\underline{u}(k) + L\left(\underline{y}(k) - \mathrm{H}\,\underline{\hat{x}}(k)\right) \tag{39}$$

Das Regelgesetz ist leicht abgeändert, zur Störunterdrückung wird die beobachtete Störung $\hat{\underline{\rho}}$ von der Stellgröße abgezogen:

$$\underline{u} = \mathrm{K}\,\underline{\hat{x}} - \hat{\underline{\rho}} \tag{40}$$

Mit entsprechenden Ausgangsmatrizen können $\underline{\hat{x}}$ und $\hat{\underline{\rho}}$ für die Implementierung ausmaskiert werden:

$$\mathrm{H}_{\hat{x}} = \begin{pmatrix} \underline{0} & \cdots & \underline{\mathrm{I}} & \cdots & \underline{0} \end{pmatrix}, \qquad \mathrm{H}_{\hat{\rho}} = \begin{pmatrix} \underline{\mathrm{I}} & \cdots & \underline{0} & \cdots & \underline{0} \end{pmatrix} \tag{41}$$

Der Regelkreis hat dann die Struktur entsprechend Figur 5.

Das in Figur 6 dargestellte Ausführungsbeispiel stimmt in großen Teilen mit dem nach Figur 4 überein, weshalb hier für dieselben Teile dieselben Bezugszeichen verwendet sind. Der Block 20 dient hier zur Symbolisierung von Störungen und/oder Verzögerungen, wie sie oben bereits behandelt worden sind.

Wie die Fig. 6 ferner zeigt, werden hier auch Zwischenkreisenergiewerte $w(t)$ gemessen und dem Eingang des Analog/Digitalwandlers 18b zugeführt; die Zwischenkreisenergiewerte werden durch Messung der Spannungen Uc an den Submodulen (vgl. Fig.3) und durch bekannte Errechnung der Zwischenkreisenergiewerte aus diesen Spannungen ermittelt. Auch hierbei ergeben sich durch die Weiterverarbeitung und Übertragung der Zwischenkreisenergiewerte Verzögerungen (vgl. Block 20). Diese verzögerten Zwischenkreisenergiewerte $w_d(k)$ werden einer Schätzereinheit 21A zur Verfügung gestellt, in der mittels Schätzung (anhand eines Signalmodells der Zwischenkreisenergiewerte), die unten noch näher anhand der Fig. 6 erläutert wird, am Ausgang der Schätzereinheit 21A Zustands-Zwischenkreisenergiewerte $\hat{w}(k)$ zur Verfügung stehen. In der Addiereinheit 15 werden diese Zustands-Zwischenkreisenergiewerte $\hat{w}(k)$ mit Soll-Zwischenkreisenergiewerten $\hat{w}_{soll}(t)$ verglichen, und es wird die Differenz der als Mehrgrößenregler ausgebildeten Regelungseinheit 16 zugeführt. Daraufhin stellen sich am Ausgang des Umrichters 1 die gewünschten Zustands-Zwischenenergiewerte $w(k)$ ein.

Insgesamt sind also bei der beschriebenen Regelung relativ viele Regelungsziele für den Umrichter 1 berücksichtigt, wodurch eine erheblich bessere und auch schnellere Regelung als bei einem Einsatz von kaskadierten Reglern erreicht ist.

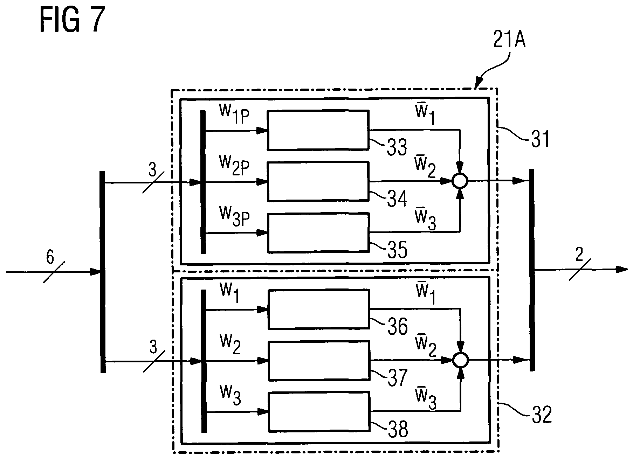

Die in der Fig. 7 dargestellte Schätzereinheit 21A ist an alle sechs Leistungshalbleiterventilzweige 2 des Umrichters 1 angeschlossen, was in der schematischen Darstellung mit der Ziffer "6" symbolisiert ist. Dabei ist der Anschluss so getroffen, dass die drei jeweils positiv-seitigen (z.B. in Fig. 2 oberen) Leistungshalbleiterventilzweige 2 getrennt von den drei jeweils negativ-seitigen (in Fig. 2 unteren) Leistungshalbleiterventilzweigen 2 der Schätzereinheit 21A zugeführt werden, durch die Ziffer "3" jeweils symbolisiert.

Die Schätzereinheit 21A umfasst eine erste Schätzeruntereinheit 31 und eine weitere Schätzeruntereinheit 32; die Schätzeruntereinheit 31 wiederum ist mit jeweils einem Schätzer 33, 34 und 35 ausgestattet, die an jeweils einem positiv-seitigen Leistungshalbleiterventilzweig 2 des Umrichters 1 angeschlossen sind und somit mit Zwischenkreisenergiewerten w1p bis w3p der positiv-seitigen Leistungshalbleiterventilzweige 2 beaufschlagt sind. Entsprechend sind Schätzern 36, 37 und 38 der Schätzeruntereinheit 32 Zwischenkreisenergiewerte w1n bis w3n der negativ-seitigen Leistungshalbleiterventilzweige 2 zugeführt.

Die Schätzer 33 bis 38 sind jeweils Parameter-Schätzer, beispielsweise Least-Square-Schätzer. Jedem Parameter-Schätzer 33 bis 38 ist im hier beschriebenen Ausführungsbeispiel ein Schwingungsmodell der Zwischenenergiewerte $w(t)$ vorgegeben, das sich durch folgende Gleichung mathematisch beschreiben lässt:

$$w(t) \; = \; A_0(t) + A_{11}(t)*\cos(\omega t) + A_{12}(t)*\sin(\omega t) + A_{21}(t)*\cos(2\omega t) +$$

$$A_{22}(t)*\sin(2\omega t)$$

In dieser Gleichung geben $A_0(t)$ den Gleichanteil der Zwischenkreisenergiewerte w(t) und $A_{11}(t)$ bis $A_{22}(t)$ weitere Parameter des Schwindungsmodells an; $\omega$ bezeichnet die Kreisfrequenz des mit dem Umrichter 1 verbundenen Wechselspannungsnetzes. Der besseren Übersichtlichkeit halber ist in der Fig.6 nicht im Einzelnen dargestellt, wie die einzelnen Least-Square-Schätzer mit einer der Frequenz des Wechselspannungsnetzes entsprechenden Messgröße beaufschlagt sind.

Bei dem durch die obige Gleichung beschriebenen Schwingungsmodell werden von den Least-Square-Schät-

zern zeitabhängige Parameter $A_0(t)$ bis $A_{22}(t)$ benutzt, was zu einer hohen Genauigkeit der Schätzung führt, aber auch relativ aufwendig ist. Als Zeitabhängigkeit kann beispielsweise eine lineare Funktion oder eine Exponentialfunktion gewählt werden.

In den Least-Square-Schätzern 33 bis 38 werden rekursiv die oben angegebenen Parameter $A_0(t)$ bis $A_{22}(t)$ berechnet, so dass an den Ausgängen der Least-Square-Schätzer jeweils diese Parameter abgegriffen werden können. In obigem Beispiel sind Oberschwingungen nur bis zur zweiten Oberwelle berücksichtigt. Zur Verfeinerung kann ggf. ein Schwingungsmodell mit weiteren Parametern höherer Oberwellen verwendet werden.

Zusammenfassend lässt sich feststellen, dass das erfindungsgemäße Verfahren die vorteilhafte Möglichkeit bietet, Störungen und Oberschwingungen in verschiedenen, vorher festgelegten Frequenzen, mithilfe eines Beobachters zu kompensieren. Der Beobachter basiert auf einem mathematischen Zustandsraummodell, welches strukturell alle Umrichterströme sowie Stell- und Messverzögerungen berücksichtigt. Die beobachten Größen werden direkt zur Kompensation der Störungen und Oberschwingungen eingesetzt.

Gemäß der Erfindung ist ein Beobachter ermöglicht, der Störungen, Oberschwingungen, Mess- und Stelltotzeiten berücksichtigt. Durch einen solchen Beobachter kann eine Regelungsstruktur, die beispielsweise als Zustandsregelung ausgeführt ist, unverzögerte geschätzte Messwerte bereitstellen und mithilfe der ermittelten Störungen und Oberschwingungen diese indirekt kompensieren. Damit erhält die Gesamtregelung die Fähigkeit zur Kompensation verschiedener Oberschwingungen und Störungen im Mit-, Gegen- und $\alpha\beta$-System, ohne dass das Führungsverhalten negativ beeinflusst wird.

Durch eine beschleunigte Regelung und eine schnelle Störgrößenkompentsation kann die Zwischenkreisenergieregelung und die Belancierung der Energien der oberen und unteren Drehspannungsquellen so verbessert werden, dass im Vergleich zu bekannten Lösungen entweder eine geringere Anzahl von Submodulen pro Zweig oder eine geringere Kondensatorkapazität ausreicht, um dieselben Netzfehlerfälle zu beherrschen. Eine geringere Modulzahl oder eine geringere Kondensatorkapazität schlagen sich in geringeren Umrichterkosten nieder.

Die Möglichkeit zur Oberschwingungskompensation ergibt darüber hinaus der Vorteil, dass eine wirtschaftliche Nutzung des Umrichters erzielt ist, da durch Erlangung dieser Fähigkeit Netzfilter aktiver oder passiver Art eingespart werden können.

Eine bessere Beherrschung von Netzfehlerfällen bedeutet eine geringere Ausfallzeit bzw. -wahrscheinlichkeit, welches für Netzbetreiber in wirtschaftlicher Hinsicht ein Vorteil sein kann.

**Patentansprüche**

**1.** Verfahren zum Regeln eines steuerbare Leistungshalbleiter aufweisenden Umrichters (1), bei dem

- Zustandsistwerte $\hat{x}(k)$, die den Zustand des Umrichters (1) beschreiben, mit Zustandssollwerten $\underline{x}_{Soll}(k)$ unter Gewinnung von Regeldifferenzwerten verglichen werden,
- die Regeldifferenzwerte einer Regelungseinheit (14, 16) zugeführt werden, die an ihrem Ausgang Stellspannungswerte $\underline{u}(k)$ erzeugt, und
- eine Steuerelektronik (19) in Abhängigkeit der Stellspannungswerte $\underline{u}(k)$ Steuersignale bereitstellt und an die Leistungshalbleiter (S1,S2) des Umrichters (1) überträgt, wobei die Regelungseinheit (14, 16) solche Stellspannungswerte $\underline{u}(k)$ generiert, dass die Regeldifferenzwerte möglichst klein werden, wobei die Zustandsistwerte $\hat{x}(k)$ von einer Beobachtungseinheit (21) ausgehend von den Stellspannungswerten $\underline{u}(k)$ und unter Berücksichtigung von gemessenen Stromwerten $\underline{x}(k)$ berechnet werden, wobei die Beobachtungseinheit (21) Störungseffekte berücksichtigt, so dass die Zustandsistwerte $\hat{x}(k)$ von Störungseffekten befreiten ungestörten Strommesswerten entsprechen,
**dadurch gekennzeichnet, dass**
- Zustands-Zwischenkreisenergiewerte $\hat{w}(k)$ mittels einer auf ein Signalmodell der Zwischenkreisenergiewerte zurück greifenden Schätzereinheit (21A) aus gemessenen Zwischenkreisenergiewerten ermittelt werden, wobei die Schätzereinheit (21A) die Parameter des Signalmodells der Zwischenkreisenergiewerte $\underline{w}(k)$ unter Ermittlung jeweils einer Zustands-Zwischenkreisenergiewerte $\hat{w}(k)$ der positiv-seitigen und die negativ-seitigen Drehspannungsquelle des Umrichters (1) darstellenden Gleichgröße errechnet, und
- die Zustands-Zwischenkreisenergiewerte $\hat{w}(k)$ zusätzlich zu den Zustands-Stromwerten $\underline{X}^{\wedge}(k)$ der Regelungseinheit (16) zugeführt werden.

**2.** Verfahren nach Anspruch 1,
**dadurch gekennzeichnet, dass**
die Zustandsistwerte Stromistwerte $\hat{x}(k)$ und die Zustandssollwerte Stromsollwerte $\underline{x}_{Soll}(k)$ sind.

**3.** Verfahren nach Anspruch 1 oder 2,
**dadurch gekennzeichnet, dass**
die Beobachtungseinheit (21) neben den ungestörten Zustandsistwerten $\hat{x}(k)$ gestörte zustandsmodellmesswerte $\hat{y}_d(k)$ bereitstellt, die messbaren Zustandsmesswerten $\underline{y}_d(k)$ entsprechen, wobei die Zustandsmodellmesswerte $\hat{y}_d(k)$ mit durch Messungen erhaltenen Zustandsmesswerten $\underline{y}_d(k)$ unter Gewinnung einer Modellausgangsabweichung verglichen werden, die Modellmesswertabweichung der Beobachtungseinheit (21) eingangsseitig zugeführt und die Modellierung so durchgeführt wird, dass die Modellmesswertabweichung möglichst klein wird.

**4.** Verfahren nach einem der vorhergehenden Ansprüche,
**dadurch gekennzeichnet, dass**
die Modellmesswertabweichung der Beobachtungseinheit (21) über eine Rückführungseinheit (25) zugeführt wird, welche die Modellmesswertabweichung verstärkt.

**5.** Verfahren nach einem der vorhergehenden Ansprüche,
**dadurch gekennzeichnet, dass** das Berücksichtigen von Störungseffekten, die auf Fehlern in einem mit dem Umrichter (1) verbundenen elektrischen Energieversorgungsnetz beruhen und die Berücksichtigung von Fehlern umfasst, die durch den Umrichter (1) verursacht werden.

**6.** Verfahren nach einem der vorhergehenden Ansprüche,
**dadurch gekennzeichnet, dass**
die Beobachtungseinheit (21) mit Hilfe eines Zustandraummodells gemäß

$$\hat{\underline{x}}'_{\rho}(k+1) = \underline{\Phi}_{\rho} \cdot \hat{\underline{x}}'_{\rho}(k+1) + \underline{\Gamma}\,\underline{\rho}(k)$$

$$\hat{\underline{y}}_d(k) = \underline{H}_{\rho} \cdot \hat{\underline{x}}'_{\rho}(k)$$

modelliert wird, wobei $\hat{\underline{x}}'_{\rho}$ einem Zustandsvektor des Umrichters (1) einschließlich gestörter Zustände, $\underline{\rho}(k)$ einem Vektor der Stellspannungen, $\underline{\Phi}$, $\underline{\Gamma}$ und $\underline{H}$ Modellmatrizen und $\hat{\underline{y}}_d$ einem Vektor von mit Störungen behafteten Zustandsmodellmesswerten entsprechen.

**7.** Verfahren nach einem der vorangehenden Ansprüche,
**dadurch gekennzeichnet, dass**
die Beobachtungseinheit (21) zusätzlich Verzögerungseffekte berücksichtigt, so dass die Zustandsistwerte $\hat{x}(k)$ von Störungs- und Verzögerungseffekten befreiten unverzögerten und ungestörten Strommesswerten entsprechen.

**8.** Verfahren nach Anspruch 7,
**dadurch gekennzeichnet, dass**
die Beobachtungseinheit (21) neben den unverzögerten Zustandsistwerten $\hat{x}(k)$ verzögerte Zustandsmodellmesswerte $\hat{y}_d(k)$ bereitstellt, die messbaren Zustandsmesswerten $\underline{y}_d(k)$ entsprechen, wobei die Zustandsmodellmesswerte $\hat{y}_d(k)$ mit durch Messungen erhaltenen zustandsmesswerten $\underline{y}_d(k)$ unter Gewinnung einer Modellmesswertabweichung verglichen werden, die Modellmesswertabweichung der Beobachtungseinheit (21) eingangsseitig zugeführt und die Modellierung so durchgeführt wird, dass die Modellmesswertabweichung möglichst klein wird.

**9.** Verfahren nach Anspruch 7 oder 8,
**dadurch gekennzeichnet, dass**
die Modellmesswertabweichung der Beobachtungseinheit (21) über eine Rückführungseinheit (25) zugeführt wird, welche die Modellmesswertabweichung verstärkt.

**10.** Verfahren nach einem der vorgehenden Ansprüche,
**dadurch gekennzeichnet, dass**
die Berücksichtigung von Verzögerungseffekten das Berücksichtigen von Messverzögerungen, die bei der digitalen Erfassung der Zustandsgrößen des Umrichters (1) entstehen, und die Berücksichtigung von Stellverzögerungen umfasst, die von der Steuerelektronik (19) verursacht werden.

**11.** Verfahren nach Anspruch 10,
**dadurch gekennzeichnet, dass**

bei der Erfassung der zustandsmesswerte $\underline{y}_d(k)$ die Zustandsgröße des Umrichters (1) gemessen, das dabei gewonnene Messsignal in Abtastschritten unter Gewinnung von Abtastwerten fortlaufend abgetastet und die Abtastwerte anschließend digitalisiert werden, wobei die Modellierung der sich dabei einstellenden Messverzögerungen unter der Annahme erfolgt, dass die Messverzögerung einer Zeitdauer von mehreren Abtastschritten entspricht.

**12.** Verfahren nach Anspruch 11,
**dadurch gekennzeichnet, dass**
dass eine Zeitdauer von vier Abtastschritten gewählt wird.

**13.** Verfahren nach Anspruch 11 oder 12,
**dadurch gekennzeichnet, dass**
eine Stellverzögerung $\tau$ gemäß

$$\tau = (l - 1) \cdot \mathrm{T} + \tau'$$

modelliert wird, wobei $l$ der Anzahl mehrerer Abtastschritte entspricht, deren Summe kleiner ist als die Stellverzögerung $\tau$, und $\tau'$ als Restanteil kürzer ist als die Zeitdauer zwischen zwei Abtastschritten k.

**14.** Verfahren nach Anspruch 13,
**dadurch gekennzeichnet, dass**
$l$ gleich 2 ist.

**15.** Verfahren nach einem der vorhergehenden Ansprüche,
**dadurch gekennzeichnet, dass**
der Umrichter mit Hilfe eines Zustandraummodells gemäß

$$\hat{\underline{x}}'(k+1) = \underline{\Phi}\,\hat{\underline{x}}'(k) + \underline{\Gamma}\,\underline{u}(k)$$

$$\hat{\underline{y}}_d(k) = \underline{H}\,\hat{\underline{x}}'(k)$$

modelliert wird, wobei $\hat{\underline{x}}'(k)$ einem Zustandsvektor des Umrichters einschließlich verzögerten Zuständen, $\underline{u}_k$ einem Vektor der Stellspannungen, $\underline{\Phi}$, $\underline{\Gamma}$ und $\underline{H}$ Modellmatrizen und $\hat{\underline{y}}_d$ einem Vektor von mit Verzögerungen behafteten Zustandsmodellmesswerten entsprechen.

**16.** Verfahren nach Anspruch 1,
**dadurch gekennzeichnet, dass**

- die Zustands-Zwischenkreisenergiewerte der positiv-seitigen und der negativ-seitigen Leistungshalbleiterventilzweige (2) des Umrichters (1) jeweils für sich erfasst werden,
- mittels jeweils eines Parameter-Schätzers (33,34,35;36,37,38) der Schätzereinheit (21A) die Parameter des Signalmodells der Zwischenenergiewerte $\underline{w}(k)$ errechnet werden,
- die jeweils einen Gleichanteil beschreibenden Parameter der positiv-seitigen und der negativen Leistungshalbleiterventilzweige (2) jeweils für sich unter Bildung der Zwischenkreisenergie-Gleichgrößen addiert werden.

**17.** Verfahren nach Anspruch 16,
**dadurch gekennzeichnet, dass**

- Parameter-Schätzer mit rekursivem Algorithmus verwendet werden.

**18.** Verfahren nach Anspruch 16 oder 17,
**dadurch gekennzeichnet, dass**

- als Schätzer ein Parameter-Schätzer mit einem Schwingungsmodell $w(t)$ für die Zwischenkreisenergiewerte

$$w(t) = A_0 + A_{k1} * \cos(k\omega t) + A_{k2} * \sin(k\omega t)$$

für k=1 bis n verwendet wird,

- in dem $A_0$ den Gleichanteil der Zwischenkreisenergiewerte und $A_{k1}$ und $A_{k2}$ weitere Parameter des Schwingungsmodells sowie $\omega$ die Kreisfrequenz eines mit dem Umrichter (1) verbundenen Wechselspannungsnetzes angibt.

19. Verfahren nach Anspruch 18,
   **dadurch gekennzeichnet, dass**

   - als Schätzer ein Parameter -Schätzer mit einem Schwingungsmodell $w(t)$ für die Zwischenkreisenergiewerte

$$w(t) = A_0 + A_{11} * \cos(\omega t) + A_{12} * \sin(\omega t) + A_{21} * \cos(2\omega t) + A_{22} * \sin(2\omega t)$$

   $w(t) = A_0 + A_{11}*\cos(\omega t) + A_{12}*\sin(\omega t) + A_{21}*\cos(2\omega t) + A_{22}*\sin(2\omega t)$ verwendet wird,
   - in dem $A_0$ den Gleichanteil der Zwischenkreisenergiewerte und $A_{11}$ bis $A_{22}$ weitere Parameter des Schwingungsmodells sowie $\omega$ die Kreisfrequenz eines mit dem Umrichter (1) verbundenen Wechselspannungsnetzes angibt.

20. Verfahren nach Anspruch 18 oder 19,
   **dadurch gekennzeichnet, dass**

   - ein Schwingungsmodell mit zeitabhängigen Parametern $A_0(t)$ bis $A_{k2}(t)$ verwendet wird.

21. Verfahren nach Anspruch 20,
   **dadurch gekennzeichnet, dass**

   - die Zeitabhängigkeit der Parameter durch eine lineare Funktion oder eine Exponentialfunktion vorgegeben wird.

22. Verfahren nach Anspruch 18 oder 19,
   **dadurch gekennzeichnet, dass**

   - ein Schwingungsmodell mit zeitlich konstanten Parametern $A_0$ bis $A_{k2}$ verwendet wird.

23. Verfahren nach einem der vorhergehenden Ansprüche, **dadurch gekennzeichnet, dass**

   - als Umrichter (1) ein Multilevel-Umrichter verwendet wird, der zu einer Brückenschaltung miteinander verbundene Leistungshalbleiterventilzweige (2) aufweist, wobei jeder der Leistungshalbleiterventilzweige (2) aus einer Reihenschaltung von bipolaren Submodulen (8) besteht und jedes Submodul (8) eine Schaltung (9) von Leistungshalbleitern sowie eine parallel dazu angeordnete Kondensatoreinheit (10) umfasst.

24. Anordnung zur Durchführung des Verfahrens nach einem der Ansprüche 1, 16 bis 22 mit einer Regelungseinheit (16.), bei dem die Regelungseinheit (16) ausgangsseitig mit einem Eingang einer ein Modell des Umrichters darstellenden Beobachtungseinheit (21) verbunden ist, die mit einem weiteren Eingang an den Ausgang des Umrichters (1) angeschlossen ist, bei dem ferner

   - an den Ausgang des Umrichters (1) eine das Signalmodell von Zwischenkreisenergiewerten $\underline{w}(k)$ nachbildende Schätzereinheit (21A) angeschlossen ist und bei der
   - die Beobachtungseinheit (21) und die Schätzereinheit (21A) ausgangsseitig mit Ist-Eingängen der Regelungseinheit (16) verbunden sind.

25. Anordnung nach Anspruch 24,

   - bei dem bei einem Umrichter (1) mit sechs Leistungshalbleiter
   - ventilzweigen (2) die Schätzereinheit (21A) für jeden der drei positiv-seitigen Leistungshalbleiterventilzweige (2) jeweils einen Schätzer (33, 34, 35) und für jeden der drei negativseitigen Leistungshalbleiterventilzweige (2) jeweils einen weiteren Schätzer (36, 37, 38) aufweist.

26. Anordnung nach Anspruch 24 oder 25,

- bei dem die Beobachtungseinheit (21) eine den Umrichter (1) nachbildende Modelleinheit (22) aufweist, die mit ihrem einen Eingang mit dem Ausgang der Regelungseinheit (16) und mit ihrem anderen Eingang mit dem Ausgang einer Rückführungseinheit (25) verbunden ist,
- bei dem die Rückführungseinheit (25) mit dem Ausgang einer Summierschaltung (24) verbunden ist, die mit ihrem einen Eingang an den Ausgang des Umrichters (1) und mit ihrem weiteren Eingang an den Ausgang einer Ausschneideeinheit (23) angeschlossen ist, wobei die Ausschneideeinheit (23) mit dem Ausgang der Modelleinheit (22) verbunden ist, und
- der Ausgang der Modelleinheit (22) über eine weitere Ausschneideeinheit (26) mit dem Eingang der Regelungseinheit (16) verbunden ist.

27. Anordnung nach einem der Ansprüche 24 bis 26, **dadurch gekennzeichnet, dass**

- der Umrichter (1) ein Multilevel-Umrichter ist, der zu einer Brückenschaltung miteinander verbunden Leistungshalbleiterventilzweige (2) aufweist, wobei jeder der Leistungshalbleiterventilzweige (2) aus einer Reihenschaltung von Submodulen (8) besteht und jedes Submodul (8) eine Schaltung (9) von Leistungshalbleitern sowie eine parallel dazu angeordnete Kondensatoreinheit (10) umfasst.


**Claims**

1. Method for controlling a converter (1) having controllable power semiconductors, in which

- actual state values $\hat{\underline{x}}(k)$ describing the state of the converter (1) are compared with desired state values $\underline{x}_{Soll}(k)$, with control difference values being obtained,
- the control difference values are supplied to a control unit (14, 16) which generates actuating voltage values $\underline{u}(k)$ at its output, and
- control electronics (19) provide control signals depending on the actuating voltage values $\underline{u}(k)$ and transmit said control signals to the power semiconductors (S1, S2) of the converter (1), wherein the control unit (14, 16) generates actuating voltage values $\underline{u}(k)$ such that the control difference values become as small as possible, wherein the actual state values $\hat{\underline{x}}(k)$ are calculated by an observation unit (21) proceeding from the actuating voltage values $\underline{u}(k)$ and taking account of measured current values $\underline{x}(k)$, wherein the observation unit (21) takes account of disturbance effects, with the result that the actual state values $\hat{\underline{x}}(k)$ correspond to undisturbed current measurement values which have been freed of disturbance effects,

**characterized in that**

- state intermediate circuit energy values $\hat{\underline{w}}(k)$ are determined from measured intermediate circuit energy values by means of an estimator unit (21A) that has recourse to a signal model of the intermediate circuit energy values, wherein the estimator unit (21A) calculates the parameters of the signal model of the intermediate circuit energy values $\underline{w}(k)$ whilst determining in each case a DC variable representing state intermediate circuit energy values $\hat{\underline{w}}(k)$ of the positive-side and the negative-side three-phase voltage source of the converter (1), and
- the state intermediate circuit energy values $\hat{\underline{w}}(k)$ are supplied to the control unit (16) in addition to the state current values $\hat{\underline{x}}(k)$.

2. Method according to Claim 1,
**characterized in that**
the actual state values are actual current values $\hat{\underline{x}}(k)$ and the desired state values are desired current values $\underline{x}_{Soll}(k)$.

3. Method according to Claim 1 or 2,
**characterized in that**
the observation unit (21) provides, besides the actual state values $\hat{\underline{x}}(k)$ that are undisturbed, disturbed state model measurement values $\hat{\underline{y}}_d(k)$ corresponding to measurable state measurement values $\underline{y}_d(k)$, wherein the state model measurement values $\hat{\underline{y}}_d(k)$ are compared with state measurement values $\underline{y}_d(k)$ obtained by measurements, with a model output deviation being obtained, the model measurement value deviation is supplied to the observation unit (21) on the input side and the modelling is carried out such that the model measurement value deviation becomes as small as possible.

4. Method according to one of the preceding claims,
**characterized in that**
the model measurement value deviation is supplied to the observation unit (21) via a feedback unit (25) which amplifies the model measurement value deviation.

5. Method according to one of the preceding claims,
**characterized in that**
taking account of disturbance effects based on faults in an electrical power supply system connected to the converter (1) comprises taking account of faults caused by the converter (1).

6. Method according to one of the preceding claims,
**characterized in that**
the observation unit (21) is modelled with the aid of a state space model in accordance with

$$\hat{\underline{x}}'_\rho(k+1) = \underline{\Phi}_\rho \cdot \hat{\underline{x}}'_\rho(k+1) + \underline{\Gamma}\underline{\rho}(k)$$

$$\hat{\underline{y}}_d(k) = \underline{H}_\rho \cdot \hat{\underline{x}}'_\rho(k) \qquad ,$$

wherein $\hat{\underline{x}}'_\rho$ corresponds to a state vector of the converter (1) including disturbed states, $\underline{\rho}(k)$ corresponds to a vector of the actuating voltages, $\underline{\Phi}$, $\underline{\Gamma}$ and $\underline{H}$ correspond to model matrices, and $\hat{\underline{y}}_d$ corresponds to a vector of state model measurement values beset by disturbances.

7. Method according to one of the preceding claims,
**characterized in that**
the observation unit (21) additionally takes account of delay effects, such that the actual state values $\hat{\underline{x}}(k)$ correspond to undelayed and undisturbed current measurement values freed of disturbance and delay effects.

8. Method according to Claim 7,
**characterized in that**
the observation unit (21) provides, besides the undelayed actual state values $\hat{\underline{x}}(k)$, delayed state model measurement values $\hat{\underline{y}}_d(k)$ corresponding to measurable state measurement values $\underline{y}_d(k)$, wherein the state model measurement values $\hat{\underline{y}}_d(k)$ are compared with state measurement $\underline{y}_d(k)$ obtained by measurements, with a model measurement value deviation being obtained, the model measurement value deviation is supplied to the observation unit (21) on the input side and the modelling is carried out such that the model measurement value deviation becomes as small as possible.

9. Method according to Claim 7 or 8,
**characterized in that**
the model measurement value deviation is supplied to the observation unit (21) via a feedback unit (25) which amplifies the model measurement value deviation.

10. Method according to one of the preceding claims,
**characterized in that**
taking account of delay effects comprises taking account of measurement delays that arise during the digital detection of the state variables of the converter (1) and taking account of actuating delays caused by the control electronics (19).

11. Method according to Claim 10,
**characterized in that**
during the detection of the state measurement values $\underline{y}_d(k)$, the state variable of the converter (1) is measured, the measurement signal obtained in this case is continuously sampled in sampling steps, with samples being obtained, and the samples are subsequently digitized, wherein the measurement delays established in this case are modelled assuming that the measurement delay corresponds to a time duration of a plurality of sampling steps.

**12.** Method according to Claim 11,
**characterized in that**
a time duration of four sampling steps is selected.

**13.** Method according to Claim 11 or 12,
**characterized in that**
an actuating delay $\tau$ is modelled in accordance with

$$\tau = (l-1)\cdot \mathrm{T} + \tau'$$

wherein $l$ corresponds to the number of a plurality of sampling steps whose sum is less than the actuating delay $\tau$, and $\tau'$ as remainder is shorter than the time duration between two sampling steps k.

**14.** Method according to Claim 13,
**characterized in that**
$l$ is equal to 2.

**15.** Method according to one of the preceding claims,
**characterized in that**
the converter is modelled with the aid of a state space model in accordance with

$$\hat{\underline{x}}^{'}(k+1) = \underline{\Phi}\,\hat{\underline{x}}^{'}(k) + \underline{\Gamma}\,u(k)$$

$$\hat{\underline{y}}_{d}(k) = \underline{H}\,\hat{\underline{x}}^{'}(k)$$

wherein $\hat{\underline{x}}'(k)$ corresponds to a state vector of the converter including delayed states, $\underline{u(k)}$ corresponds to a vector of the actuating voltages, $\underline{\Phi}$, $\underline{\Gamma}$ and $\underline{H}$ correspond to model matrices, and $\hat{\underline{y}}_{d}$ corresponds to a vector of state model measurement values beset by delays.

**16.** Method according to Claim 1,
**characterized in that**

- the state intermediate circuit energy values of the positive-side and of the negative-side power semiconductor valve branches (2) of the converter (1) are each individually detected,
- the parameters of the signal model of the intermediate energy values $\underline{w}(k)$ are calculated by means of a respective parameter estimator (33, 34, 35; 36, 37, 38) of the estimator unit (21A),
- the parameters of the positive-side and of the negative-side power semiconductor valve branches (2) that respectively describe a DC component are each individually added to form the intermediate circuit energy DC variables.

**17.** Method according to Claim 16,
**characterized in that**

- parameter estimators with a recursive algorithm are used.

**18.** Method according to Claim 16 or 17,
**characterized in that**

- as estimator a parameter estimator with an oscillation model $w(t)$ for the intermediate circuit energy values
$w(t) = A_0 + A_{k1}*cos(k\omega t) + A_{k2}*sin(k\omega t)$ for k = 1 to n is used,
- in which $A_0$ indicates the DC component of the intermediate circuit energy values and $A_{k1}$ and $A_{k2}$ indicate further parameters of the oscillation model and $\omega$ indicates the angular frequency of an AC voltage power supply system connected to the converter (1).

**19.** Method according to Claim 18,
**characterized in that**

- as estimator a parameter estimator with an oscillation model $w(t)$ for the intermediate circuit energy values $w(t) = A_0 + A_{11} \ast \cos(\omega t) + A_{12} \ast \sin(\omega t) + A_{21} \ast \cos(2\omega t) + A_{22} \ast \sin(2\omega t)$ is used,
- in which $A_0$ indicates the DC component of the intermediate circuit energy values and $A_{11}$ to $A_{22}$ indicate further parameters of the oscillation model and $\omega$ indicates the angular frequency of an AC voltage power supply system connected to the converter (1).

**20.** Method according to Claim 18 or 19,
**characterized in that**

- an oscillation model with time-dependent parameters $A_0(t)$ to $A_{k2}(t)$ is used.

**21.** Method according to Claim 20,
**characterized in that**

- the time dependence of the parameters is predefined by a linear function or an exponential function.

**22.** Method according to Claim 18 or 19,
**characterized in that**

- an oscillation model with temporally constant parameters $A_0$ to $A_{k2}$ is used.

**23.** Method according to one of the preceding claims, **characterized in that**

- the converter (1) used is a multilevel converter having power semiconductor valve branches (2) connected to one another to form a bridge circuit, wherein each of the power semiconductor valve branches (2) consists of a series circuit formed by bipolar submodules (8) and each submodule (8) comprises a circuit (9) formed by power semiconductors and also a capacitor unit (10) arranged in parallel therewith.

**24.** Arrangement for carrying out the method according to one of Claims 1, 16 to 22, having a control unit (16), in which the control unit (16) is connected on the output side to an input of an observation unit (21) which represents a model of the converter and is connected, by a further input, to the output of the converter (1), in which furthermore

- an estimator unit (21A) simulating the signal model of intermediate circuit energy values $\underline{w}(k)$ is connected to the output of the converter (1), and in which
- the observation unit (21) and the estimator unit (21A) are connected on the output side to actual inputs of the control unit (16).

**25.** Arrangement according to Claim 24,

- in which, in the case of a converter (1) comprising six power semiconductor valve branches (2), the estimator unit (21A) has a respective estimator (33, 34, 35) for each of the three positive-side power semiconductor valve branches (2) and a respective further estimator (36, 37, 38) for each of the three negative-side power semiconductor valve branches (2).

**26.** Arrangement according to Claim 24 or 25,

- in which the observation unit (21) has a model unit (22) which simulates the converter (1) and which is connected by one of its inputs to the output of the control unit (16) and by its other input to the output of a feedback unit (25),
- in which the feedback unit (25) is connected to the output of a summing circuit (24) which is connected by one of its inputs to the output of the converter (1) and by its further input to the output of a cut-out unit (23), wherein the cut-out unit (23) is connected to the output of the model unit (22), and
- the output of the model unit (22) is connected to the input of the control unit (16) via a further cut-out unit (26).

**27.** Arrangement according to one of Claims 24 to 26, **characterized in that**

- the converter (1) is a multilevel converter having power semiconductor valve branches (2) connected to one another to form a bridge circuit, wherein each of the power semiconductor valve branches (2) consists of a series circuit formed by submodules (8) and each submodule (8) comprises a circuit (9) formed by power semiconductors and also a capacitor unit (10) arranged in parallel therewith.

**Revendications**

1. Procédé de régulation d'un convertisseur (1) ayant des semi-conducteurs de puissance pouvant être commandés, dans lequel

- on compare des valeurs $\hat{\underline{x}}(k)$ réelles d'état, qui décrivent l'état du convertisseur (1), à des valeurs $\underline{x}_{Soll}(k)$ de consigne d'état en obtenant des valeurs de différences de régulation,
- on envoie les valeurs de différence de régulation à une unité (14, 16) de régulation, qui produit des valeurs $\underline{u}(k)$ de tension de réglage à sa sortie et
- une électronique de commande met, en fonction des valeurs $\underline{u}(k)$ de tension de réglage, à disposition des signaux de commande et les transmet aux semi-conducteurs (S1, S2) de puissance du convertisseur (1), l'unité (14, 16) de régulation produisant des valeurs $\underline{u}(k)$ de tension de réglage telles que les valeurs de différence de régulation deviennent aussi petites que possible, les valeurs $\hat{\underline{x}}(k)$ réelles d'état étant calculées par ne unité (21) d'observation à partir des valeurs $\underline{u}(k)$ de tension de réglage et en tenant compte de valeurs $x(k)$ de courant mesurées, l'unité (21) d'observation prenant en compte des effets de perturbation de manière à ce que les valeurs $\hat{\underline{x}}(k)$ réelles d'état correspondent à des valeurs de mesure du courant non-perturbées débarrassées d'effets de perturbation,

**caractérisé en ce que**

- on détermine des valeurs $\hat{\underline{w}}(k)$ d'énergie de circuit intermédiaire-état à partir de valeurs d'énergie de circuit intermédiaire mesurées au moyen d'une unité (21A) d'estimation se référant à un modèle de signal des valeurs d'énergie de circuit intermédiaire, l'unité (21A) d'estimation calculant les paramètres du modèle de signal des valeurs $\hat{\underline{w}}(k)$ d'énergie de circuit intermédiaire en déterminant respectivement une valeur $\hat{\underline{w}}(k)$ d'énergie de circuit intermédiaire-état du côté positif et la grandeur continue représentant la source de tension polyphasée du côté négatif du convertisseur (1) et
- on envoie, à l'unité (16) de régulation, les valeurs $\hat{\underline{w}}(k)$ d'énergie de circuit intermédiaire-état en plus des valeurs $\hat{\underline{x}}(k)$ de courant d'état.

2. Procédé suivant la revendication 1,
**caractérisé en ce que**
les valeurs réelles d'état sont des valeurs $\hat{\underline{x}}(k)$ réelles de courant et les valeurs de consigne d'état sont des valeurs $\underline{x}_{Soll}(k)$ de courant.

3. Procédé suivant la revendication 1 ou 2,
**caractérisé en ce que**
l'unité (21) d'observation met, outre les valeurs $\hat{\underline{x}}(k)$ réelles d'état non-perturbées, à disposition des valeurs $\hat{\underline{\gamma}}_d(k)$ de mesure de modèle d'état perturbées, qui correspondent aux valeurs $\underline{\gamma}_d(k)$ de mesure d'état mesurables, les valeurs $\hat{\underline{\gamma}}_d(k)$ de mesure de modèle d'état étant comparées à des valeurs $\underline{\gamma}_d(k)$ de mesure d'état obtenues par des mesures en obtenant un écart de sortie de modèle, on envoie, du côté de l'entrée, à l'unité (21) d'observation, l'écart de valeur de mesure de modèle et on effectue la modélisation de manière à ce que l'écart de valeur de mesure de modèle devienne aussi petit que possible.

4. Procédé suivant l'une des revendications précédentes,
**caractérisé en ce que**
l'on envoie l'écart de valeur de mesure de modèle à l'unité (21) d'observation par l'intermédiaire d'une unité (25) de retour, qui amplifie l'écart de valeur de mesure de modèle.

5. Procédé suivant l'une des revendications précédentes,
**caractérisé par**
on prend en compte des effets de perturbation, qui reposent sur des défauts dans un réseau d'alimentation en énergie électrique relié au convertisseur (1), et des défauts qui sont provoqués par le convertisseur (1).

**6.** Procédé suivant l'une des revendications précédentes,
**caractérisé en ce que**
l'on modèlise l'unité (21) d'observation à l'aide d'un modèle spatial d'état suivant

$$\hat{\underline{x}}'_\rho(k+1) = \underline{\Phi}_\rho \cdot \hat{\underline{x}}'_\rho(k+1) + \underline{\Gamma}\rho(k)$$

$$\hat{\underline{y}}_d(k) = \underline{H}_\rho \cdot \hat{\underline{x}}'_\rho(k)$$

dans lesquelles $\hat{\underline{x}}'_\rho$ est un vecteur d'état du convertisseur (1) incluant des états perturbés, $\rho(k)$ est un vecteur des tensions de réglage, $\underline{\Phi}$, $\underline{\Gamma}$ et $\underline{H}$ sont des matrices de modèle et un vecteur de valeurs de mesure de modèle d'état entachées de perturbation.

**7.** Procédé suivant l'une des revendications précédentes,
**caractérisé en ce que**
l'unité (21) d'observation tient compte, en outre, d'effets de retard, de sorte que les valeurs $\hat{\underline{x}}(k)$ réelles d'état correspondent à des valeurs de mesure de courant non-perturbées et non-retardées, débarrassées des effets de perturbation et de retard.

**8.** Procédé suivant la revendication 7,
**caractérisé en ce que**
l'unité (21) d'observation met, outre les valeurs $\hat{\underline{x}}(k)$ réelles d'état non-retardées, à disposition des valeurs $\hat{\gamma}_d(k)$ de mesure de modèle d'état retardées, qui correspondent à des valeurs $\gamma_d(k)$ de mesure d'état mesurables, des valeurs $\hat{\gamma}_d(k)$ de mesure de modèle d'état étant comparées à une valeur $\gamma_d(k)$ de mesure d'état obtenue par deux mesures, en obtenant un écart de valeurs de mesure de modèle, on envoie, du côté de l'entrée, à l'unité (21) d'observation l'écart de valeurs de mesure de modèle et on effectue la modélisation, de manière à ce que l'écart de valeurs de mesure de modèle devienne aussi petit que possible.

**9.** Procédé suivant la revendication 7 ou 8,
**caractérisé en ce que**
l'on envoie l'écart de valeurs de mesure de modèle à l'unité (21) d'observation par une unité (25) de retour, qui amplifie l'écart de valeurs de mesure de modèle.

**10.** Procédé suivant l'une des revendications précédentes,
**caractérisé en ce que**
la prise en compte d'effets de retard comprend la prise en compte de retards de mesure, qui se produisent à la détection numérique des grandeurs d'état du convertisseur (1), et la prise en compte de retards de réglage, qui sont provoqués par l'électronique (19) de commande.

**11.** Procédé suivant la revendication 10,
**caractérisé en ce que**
à la détection d'une valeur $\gamma_d(k)$ de mesure d'état, on mesure les grandeurs d'état du convertisseur (1), on échantillonne en continu le signal de mesure obtenu dans des stades d'échantillonnage en obtenant des valeurs d'échantillonnage et l'on numérise ensuite les valeurs d'échantillonnage, la modélisation des retards de mesure qui s'établissent s'effectuant en supposant que le retard de mesure correspond à une durée de plusieurs stades d'échantillonnage.

**12.** Procédé suivant la revendication 11,
**caractérisé en ce que**
l'on choisit une durée de quatre stades d'échantillonnage.

**13.** Procédé suivant la revendication 11 ou 12,
**caractérisé en ce que**
l'on modélise un retard $\tau$ de réglage suivant

$$\tau = (l-1) \cdot \mathrm{T} + \tau'$$

dans laquelle *l* est le nombre de plusieurs stades d'échantillonnage dont la somme est plus petite que le retard $\tau$ de réglage et $\tau'$ en tant que partie restante est plus courte que la durée entre deux stades k d'échantillonnage.

**14.** Procédé suivant la revendication 13,
**caractérisé en ce que**
*l* est égal à 2.

**15.** Procédé suivant l'une des revendications précédentes,
**caractérisé en ce que**
l'on modélise le convertisseur à l'aide d'un modèle spatial suivant

$$\hat{\underline{x}}'(k+1) = \underline{\Phi}\hat{\underline{x}}'(k) + \underline{\Gamma}u(k)$$

$$\hat{\underline{y}}_d(k) = \underline{H}\hat{\underline{x}}'(k)$$

dans lesquelles $\hat{\underline{x}}'(k)$ est un vecteur d'état du convertisseur, y compris des états retardés, $\underline{u}_k$ est un vecteur des tensions de réglage, $\underline{\Phi}$, $\underline{\Gamma}$ et $\underline{H}$ sont des matrices de modèle et $\hat{\underline{y}}_d$ est un vecteur de valeurs de mesure de modèle d'état entachées de retard.

**16.** Procédé suivant la revendication 1,
**caractérisé en ce que**

- l'on détecte, respectivement pour soi, les valeurs d'énergie de circuit intermédiaire-état des branches (2) de soupape à semi-conducteurs de puissance du côté positif et du côté négatif du convertisseur,
- au moyen de, respectivement, un estimateur (33, 34, 35; 36, 37, 38) de paramètres de l'unité (21A) d'estimation, on calcule les paramètres du modèle de signal des valeurs $\underline{w}(k)$ d'énergie intermédiaires,
- l'on additionne les paramètres, décrivant la partie continue, des branches (2) de soupape à semi-conducteurs de puissance du côté positif et du côté négatif, chacune pour soi, en formant les grandeurs continues d'énergie de circuit intermédiaire.

**17.** Procédé suivant la revendication 16,
**caractérisé en ce que**

- l'on utilise un estimateur de paramètres à algorithme récursif.

**18.** Procédé suivant la revendication 16 ou 17,
**caractérisé en ce que**

- l'on utilise, comme estimateur, un estimateur de paramètres ayant un modèle *w*(*t*) d'oscillation pour les valeurs d'énergie de circuit intermédiaire

$$w(t) = A_0 + A_{k1}*\cos(k\omega t) + A_{k2}*\sin(k\omega t)$$

pour k=1 à n
- dans laquelle $A_0$ est la partie continue des valeurs d'énergie de circuit intermédiaire et $A_{k1}$ et $A_{k2}$ sont d'autres paramètres du modèle d'oscillation, ainsi que $\omega$ est la pulsation d'un réseau de tension alternative relié au convertisseur (1).

**19.** Procédé suivant la revendication 18,
**caractérisé en ce que**

- l'on utilise, comme estimateur, un estimateur de paramètres ayant un modèle *w*(*t*) d'oscillation pour les valeurs d'énergie de circuit intermédiaire

$$w(t) = A_0 + A_{11}*\cos(\omega t) + A_{12}*\sin(\omega t) + A_{21}*\cos(2\omega t) + A_{22}*\cos(2\omega t)$$

- dans laquelle $A_0$ est la partie continue des valeurs d'énergie de circuit intermédiaire et $A_{11}$ à $A_{22}$ sont d'autres paramètres du modèle d'oscillation, ainsi que $\omega$ est la pulsation d'un réseau de tension alternative relié au convertisseur (1).

20. Procédé suivant la revendication 18 ou 19,
**caractérisé en ce que**

- l'on utilise un modèle d'oscillation ayant des paramètres $A_0(t)$ à $A_{k2}(t)$, qui dépendent du temps.

21. Procédé suivant la revendication 20,
**caractérisé en ce que**

- l'on donne à l'avance la variation en fonction du temps des paramètres par une fonction linéaire ou par une fonction exponentielle.

22. Procédé suivant la revendication 18 ou 19,
**caractérisé en ce que**

- l'on utilise un modèle d'oscillation ayant des paramètres $A_0(t)$ à $A_{k2}$ constants dans le temps.

23. Procédé suivant l'une des revendications précédentes,
**caractérisé en ce que**

- l'on utilise comme convertisseur (1) un convertisseur à plusieurs niveaux, qui a des branches (2) de soupape de semi-conducteurs de puissance reliées entre elles par un circuit en pont, chaque branche (2) de soupape à semi-conducteurs de puissance étant constituée d'un circuit série de sous-modules (8) bipolaires et chaque sous-module (8) comprenant un circuit (9) de semi-conducteurs de puissance, ainsi qu'une unité (10) de condensateur montée en parallèle à celui-ci.

24. Système pour effectuer le procédé suivant l'une des revendications 1, 16 à 22,
comprenant une unité (16) de régulation, dans lequel l'unité (16) de régulation est reliée, du côté de la sortie, à une entrée d'une unité (21) d'observation, qui représente un modèle du convertisseur , et qui est raccordée par une autre entrée à la sortie du convertisseur (1), dans lequel, en outre

- à la sortie du convertisseur (1) est raccordée une unité (21A) d'estimation reproduisant le modèle de signal de valeurs $\hat{w}(k)$ d'énergie de circuit intermédiaire et dans lequel
- l'unité (21) d'observation et l'unité (21A) d'estimation sont reliées du côté de la sortie à des entrées réelles de l'unité (16) de régulation.

25. Système suivant la revendication 24,

- dans lequel, pour un convertisseur (1) ayant six branches (2) de soupape à semi-conducteurs de puissance, l'unité (21A) d'estimation a, pour chacune des trois branches (2) de soupape à semi-conducteurs de puissance du côté positif, respectivement un estimateur (33, 34, 35) et, pour chacune des trois branches (2) de soupape à semi-conducteurs de puissance du côté négatif, respectivement un autre estimateur (36, 37, 38).

26. Système suivant la revendication 24 ou 25,

- dans lequel l'unité (21) d'observation a une unité (22) de modèle reproduisant le convertisseur (1), qui est reliée, par l'une de ses entrées, à la sortie de l'unité (16) de régulation et, par son autre entrée, à la sortie d'une unité (25) de retour,
- dans lequel l'unité (25) de retour est reliée, par la sortie, à un circuit (24) sommateur, qui est raccordé, par l'une de ses entrées, à la sortie du convertisseur (1) et, par l'autre entrée, à la sortie d'une unité (23) de sectionnement, l'unité (23) de sectionnement étant reliée à la sortie de l'unité (22) de modèle et
- la sortie de l'unité (22) de modèle est reliée à l'entrée de l'unité (16) de régulation par une autre unité (26) de sectionnement.

27. Système suivant l'une des revendications 24 à 26,
**caractérisé en ce que**

- le convertisseur (1) est un convertisseur à niveau multiple, qui a des branches (2) de soupape à semi-conducteurs de puissance reliées entre elles en un circuit en pont, chacune des branches (2) de soupape à semi-conducteurs de puissance étant constituée d'un circuit série de sous-modules (8) et chaque sous-module (8) comprend un circuit (9) de semi-conducteurs de puissance, ainsi qu'une unité (10) de condensateur, qui y est montée en parallèle.

FIG 1

# FIG 2

FIG 3

FIG 4

## FIG 5

## FIG 6

FIG 7

## IN DER BESCHREIBUNG AUFGEFÜHRTE DOKUMENTE

**In der Beschreibung aufgeführte Patentdokumente**

- WO 2008067784 A1

**In der Beschreibung aufgeführte Nicht-Patentliteratur**

- Modeling and Current Control of Modular Multilevel Converters Considering Actuator and Sensor Delays. **PHILIPP MÜNCH et al.** IECON 2009, 35th Annual Conference of IEEE Industrial Electronics (IECON 2009). IEEE, 03. November 2009, 1633-1638